(19) Europäisches Patentamt
European Patent Office
Office européen des brevets

(11) **EP 1 366 342 B1**

(12) **FASCICULE DE BREVET EUROPEEN**

(45) Date de publication et mention de la délivrance du brevet:
**07.04.2010 Bulletin 2010/14**

(21) Numéro de dépôt: 02703419.8

(22) Date de dépôt: **26.02.2002**

(51) Int Cl.:
*G01F 23/16* *(2006.01)*    *G01F 25/00* *(2006.01)*

(86) Numéro de dépôt international:
**PCT/CA2002/000251**

(87) Numéro de publication internationale:
**WO 2002/071006 (12.09.2002 Gazette 2002/37)**

(54) **LIMNIMETRE A BULLES ET METHODE ASSOCIEE**

PNEUMATISCHER FÜLLSTANDSMESSER UND ENTSPRECHENDES VERFAHREN

BUBBLE LEVEL METER AND RELATED METHOD

(84) Etats contractants désignés:
**DE FR IT**

(30) Priorité: **08.03.2001 CA 2340139**

(43) Date de publication de la demande:
**03.12.2003 Bulletin 2003/49**

(73) Titulaire: **HYDRO-QUEBEC**
**Montréal**
**Québec H2Z 1A4 (CA)**

(72) Inventeur: **BOUCHARD, Claude**
**Lac à la Tortue, Québec G0X 1L0 (CA)**

(74) Mandataire: **Rousset, Jean-Claude**
**Cabinet Netter**
**36, avenue Hoche**
**75008 Paris (FR)**

(56) Documents cités:
**US-A- 2 559 436    US-A- 4 630 478**
**US-A- 4 669 309    US-A- 5 953 954**

## Description

CHAMPS DE L'INVENTION

La présente invention porte sur un limnimètre à bulles ayant une stabilité et une précision de mesure améliorées, et une méthode pour adapter un limnimètre à bulles afin d'améliorer les mesures de pression. Un tel limnimètre est notamment utile pour surveiller le niveau d'eau des lacs et pour toute autre application nécessitant la mesure d'un niveau de liquide.

HISTORIQUE

Les limnimètres à bulles sont utilisés depuis plusieurs années dans le domaine des mesures de pression hydrostatique. Ils sont utilisés en raison de leur simplicité, leur efficacité, leur fiabilité à long terme et leur précision générale dans plusieurs domaines tels industriel, géotechnique, pétrolier, marin, gestion de bassins hydrographiques, etc.

Le principe de base d'un limnimètre à bulles consiste principalement à combattre la pression exercée par une colonne d'eau à l'aide d'une source de pression externe, généralement d'air, jusqu'à l'obtention d'une pression d'équilibre ou une pression égale entre la colonne d'eau et la source de pression externe. La source de pression externe devient alors la référence de mesure qui, après conversion de la pression mesurée, fournit une mesure de hauteur ou de niveau. La conversion dépend de la densité du liquide à mesurer. La pression est mesurée à l'aide de capteurs de toutes sortes, tels électriques, électroniques, optiques, pneumatiques, mécaniques, la plupart utilisant une membrane plus ou moins rigide soumise à la pression à mesurer. Les capteurs de pression sont normalement initialement étalonnés en laboratoire par leur manufacturier. C'est ainsi que les coefficients d'étalonnage et facteurs servant à calculer la pression appliquée sur la membrane sont déterminés.

Parmi toutes les caractéristiques que le manufacturier du capteur de pression aura déterminées, le coefficient de sensibilité et le facteur de dérive du capteur de pression sont les plus importants pour obtenir une lecture précise de la pression appliquée sur la membrane. Malheureusement, avec le temps ou pour des raisons de conception, ce coefficient de sensibilité d'étalonnage peut varier durant la durée de vie du capteur de pression, typiquement à l'insu de l'utilisateur. Certains facteurs peuvent influencer les mesures, tels la pression atmosphérique, une densité inégale de la colonne d'eau, des changements de température, l'humidité, la corrosion, les vibrations, etc. De plus, des composantes mécaniques ou les interfaces électriques ou électroniques reliées au capteur de pression peuvent affecter grandement le coefficient de sensibilité. Il est difficile de contrôler toutes ces composantes. Ce phénomène d'erreur du coefficient de sensibilité peut être vérifié, à la seule condition que le capteur de pression subisse un nouvel étalonnage en laboratoire ou *in situ*, avec un équipement à l'heure actuelle qui est très spécialisé. Dans tous les cas, cela est très malcommode. Puisqu'il est extrêmement difficile de savoir quand le coefficient de sensibilité a changé à cause de phénomènes impossibles à prédire dans le temps, il est donc possible que les mesures prises par l'appareil soient erronées, ce qui peut entraîner des répercussions très sérieuses.

Un autre point important est le facteur de dérive du capteur de pression, qui entraîne une erreur sur le résultat final de la lecture de niveau. Contrairement au coefficient de sensibilité qui modifie la pente d'étalonnage du capteur, la dérive apporte une valeur résiduelle qui empêche le capteur d'avoir une valeur initiale à zéro pour une pression mesurée à zéro. La grande majorité des capteurs de pression ont un facteur de dérive initial lors de leur fabrication, qui doit être considéré lors des calculs basés sur les mesures de pression. Qui plus est, le facteur de dérive change généralement avec le temps d'utilisation du capteur. Au même titre que l'erreur due à un changement de coefficient de sensibilité, celle due au facteur de dérive est aussi importante et significative sur le résultat final. Pour déterminer le facteur de dérive du capteur durant son temps d'utilisation, il est très important d'avoir les mêmes conditions de pression initiale.

Les limnimètres sont souvent installés à des endroits éloignés qui sont difficiles d'accès. Le doute sur une lecture de mesure de niveau ou, pire, une lecture erronée, peuvent causer des torts irréparables. Les coûts associés au transport du personnel pour la vérification du limnimètre sont souvent énormes et représentent un montant plus élevé que le prix d'achat d'un appareil neuf.

Connus dans l'art sont les brevets US: 3,729,997 (Luke); 3,751,185 (Gottliebson et al.); 3,987,675 (Harrison); 4,002,068 (Borst); 4,006,636 (Holmen); 4,422,327 (Anderson); 4,567,761 (Fajeau); 4,669,309 (Cornelius); 4,711,127 (Häfner); 5,005,408 (Glassey); 5,052,222 (Stoepfel); 5,090,242 (Hilton); 5,146,783 (Jansche et al.); 5,167,144 (Schneider); 5,207,251 (Cooks); 5,309,764 (Waldrop et al.); 5,406,828 (Hunter et al.); 5,517,869 (Vories); 5,636,547 (Raj et al.); 5,650,561 (Tubergen); et 5,953,954 (Drain et al.). Ces brevets montrent différents types d'appareils de mesure de niveau représentatifs de l'état de l'art. Dans les cas des appareils de types à bulles, plusieurs utilisent des tubes pneumatiques de longueurs différentes afin d'effectuer des mesures de pression différentielles. De telles mesures différentielles ont leurs avantages, mais ne règlent néanmoins pas les problèmes associés au coefficient de sensibilité et le facteur de dérive des capteurs de pression utilisés dans les appareils.

Le document brevet US 4,669,309 décrit par ailleurs un limnimètre à bulles comprenant :

- deux tubes pneumatiques submersibles en partie et ayant des ouvertures inférieure et supérieure opposées;
- un générateur de gaz connecté aux ouvertures supérieures des tubes pneumatiques;
- des capteurs de pression connectés à l'ouverture supérieure de chaque tube pneumatique de manière à y mesurer une pression interne;
- deux valves de déviation ayant chacune une ouverture de communication avec la pression atmosphérique et des positions fermée et ouverte dans lesquelles l'ouverture supérieure de son tube pneumatique communique respectivement avec le capteur de pression correspondant et sa propre ouverture de communication ; et
- un circuit de contrôle connecté au générateur de gaz, aux capteurs de pression et aux valves de déviation, le circuit de contrôle étant configuré pour i) traiter des mesures de pression obtenues des capteurs de pression, ii) commander les valves de déviation et le générateur de gaz en fonction de consignes préréglées, iii) vérifier le coefficient d'étalonnage de chaque capteur de pression en fonction des mesures de pression obtenues de ce capteur de pression lorsque la valve de déviation correspondante est alternativement en position fermée et en position ouverte, et en fonction de la distance entre l'ouverture inférieure de l'un des deux tubes pneumatiques et l'ouverture de communication de l'autre tube pneumatique, et iv) générer des données de niveau en fonction des mesures de pression traitées et des coefficients d'étalonnage.

D'autres documents brevet (US 4,630,478, US 2,559,436 et US 5,953,954) décrivent des variantes (avec ou sans circuit de contrôle et/ou avec ou sans valves de déviation) du limnimètre à bulles décrit dans le document brevet US 4,669,309 précité.

SOMMAIRE

Un objet de l'invention est de proposer un limnimètre à bulles qui permet de détecter et surveiller des changements au niveau du coefficient de sensibilité du capteur de pression utilisé par l'appareil, afin d'éliminer entièrement sinon réduire les doutes et erreurs dans les lectures de l'appareil causés par de tels changements.

Un autre objet de l'invention est de proposer un tel limnimètre qui permet d'établir un nouveau coefficient de sensibilité pour le capteur de pression, pendant l'utilisation du limnimètre.

Un autre objet de l'invention est de proposer un tel limnimètre qui peut corriger le facteur de dérive du capteur de pression.

Un autre objet de l'invention est de proposer une méthode par laquelle un limnimètre à bulles conventionnel peut être adapté pour déterminer le coefficient de sensibilité et le facteur de dérive du capteur de pression utilisé par l'appareil, et pour corriger les lectures de l'appareil.

Selon la présente invention, il est prévu un limnimètre à bulles, comprenant:

un tube pneumatique submersible en partie et ayant des ouvertures inférieure et supérieure opposées;
un générateur de gaz connecté à l'ouverture supérieure du tube pneumatique;
un capteur de pression connecté à l'ouverture supérieure du tube pneumatique de manière à mesurer une pression dans le tube pneumatique;
une valve de déviation interposée le long du tube pneumatique au-dessus et à une distance prédéterminée de l'ouverture inférieure, la valve de déviation ayant une ouverture de communication avec un milieu extérieur liquide dans lequel une partie submergée du tube pneumatique se situe, et des positions fermée et ouverte dans lesquelles l'ouverture supérieure du tube pneumatique communique respectivement avec l'ouverture inférieure du tube pneumatique et l'ouverture de communication de la valve de déviation; et
un circuit de contrôle connecté au générateur de gaz, au capteur de pression et à la valve de déviation, le circuit de contrôle étant configuré pour:

traiter des mesures de pression obtenues du capteur de pression;
commander la valve de déviation et le générateur de gaz en fonction de consignes préréglées;
vérifier un coefficient d'étalonnage du capteur de pression en fonction des mesures de pression obtenues du capteur de pression lorsque la valve de déviation est alternativement en position fermée et en position ouverte, et en fonction de la distance entre l'ouverture inférieure du tube pneumatique et l'ouverture de communication de la valve de déviation; et
générer des données de niveau en fonction des mesures de pression traitées et du coefficient d'étalonnage.

De préférence, le limnimètre comprendra de plus:

une valve de déviation additionnelle interposée entre le capteur de pression et l'ouverture supérieure du tube pneumatique, la valve de déviation additionnelle étant connectée au circuit de contrôle et ayant une ouverture de communication avec un milieu extérieur atmosphérique dans lequel une partie émergée du tube pneumatique se situe, et des positions fermée et ouverte dans lesquelles le capteur de pression communique respectivement avec l'ouverture supérieure du tube pneumatique et l'ouverture de communication de la valve de déviation additionnelle; et dans lequel le circuit de contrôle est aussi configuré pour:

> commander la valve de déviation additionnelle en fonction des consignes préréglées; et
> vérifier un facteur de dérive du capteur de pression en fonction des mesures de pression obtenues du capteur de pression lorsque la valve de déviation additionnelle est alternativement en position fermée et en position ouverte, les données de niveau générées par le circuit de contrôle étant également en fonction du facteur de dérive.

Selon la présente invention, il est également prévu une méthode pour améliorer des mesures de pression dans un limnimètre à bulles comportant un tube pneumatique submersible en partie ayant des ouvertures inférieure et supérieure opposées, un générateur de gaz connecté à l'ouverture supérieure du tube pneumatique, un capteur de pression connecté à l'ouverture supérieure du tube pneumatique, et un circuit de contrôle connecté au générateur de gaz et au capteur de pression et configuré pour traiter des mesures obtenues du capteur de pression et générer des données de niveau en fonction des mesures traitées, la méthode comprenant:

> interposer une valve de déviation le long du tube pneumatique au-dessus et à une distance prédéterminée de l'ouverture inférieure, la valve de déviation ayant une ouverture de communication avec un milieu extérieur liquide dans lequel une partie submergée du tube pneumatique se situe, et des positions fermée et ouverte dans lesquelles l'ouverture supérieure du tube pneumatique communique respectivement avec l'ouverture inférieure du tube pneumatique et l'ouverture de communication de la valve de déviation;
> connecter la valve de deviation au circuit de contrôle; et
> configurer le circuit de contrôle pour:

>> commander la valve de deviation en fonction de consignes préréglées;
>> vérifier un coefficient d'étalonnage du capteur de pression en fonction de mesures de pression obenues du capteur de pression lorsque la valve de déviation est alternativement en position fermée et en position ouverte et en fonction de la distance entre l'ouverture inférieure du tube pneumatique et l'ouverture de communication de la'valve de déviation; et
>> générer les données de niveau en fonction du coefficient d'étalonnage.

De préférence, la méthode comprendra de plus:

> interposer une valve de déviation additionnelle entre le capteur de pression et l'ouverture supérieure du tube pneumatique, la valve de déviation additionnelle ayant une ouverture de communication avec un milieu extérieur atmosphérique dans lequel une partie émergée du tube pneumatique se situe, et des positions fermée et ouverte dans lesquelles le capteur de pression communique respectivement avec l'ouverture supérieure du tube pneumatique et l'ouverture de communication de la valve de déviation additionnelle;
> connecter la valve de déviation additionnelle au circuit de contrôle; et
> configurer le circuit de contrôle pour:

>> commander la valve de déviation additionnelle en fonction des consignes préréglées;
>> vérifier un facteur de dérive du capteur de pression en fonction des mesures de pression obtenues du capteur de pression lorsque la valve de déviation additionnelle est alternativement en position fermée et en position ouverte; et
>> générer les données de niveau en fonction du facteur de dérive.

DESCRIPTION BRÈVE DES DESSINS

Une description détaillée des réalisations préférées de l'invention sera donnée ci-après en référence avec les dessins suivants, dans lesquels les mêmes numéros font référence à des éléments identiques ou similaires:

> Figure 1 est un diagramme schématique d'un limnimètre à bulles selon l'invention; et
> Figures 2 à 11 sont des tableaux et graphiques illustrant des exemples de calculs de niveaux d'eau, de coefficients d'étalonnage et de facteurs de dérive sous différentes conditions possibles du limnimètre selon l'invention.

## DESCRIPTION DÉTAILLÉE DES RÉALISATIONS PRÉFÉRÉES

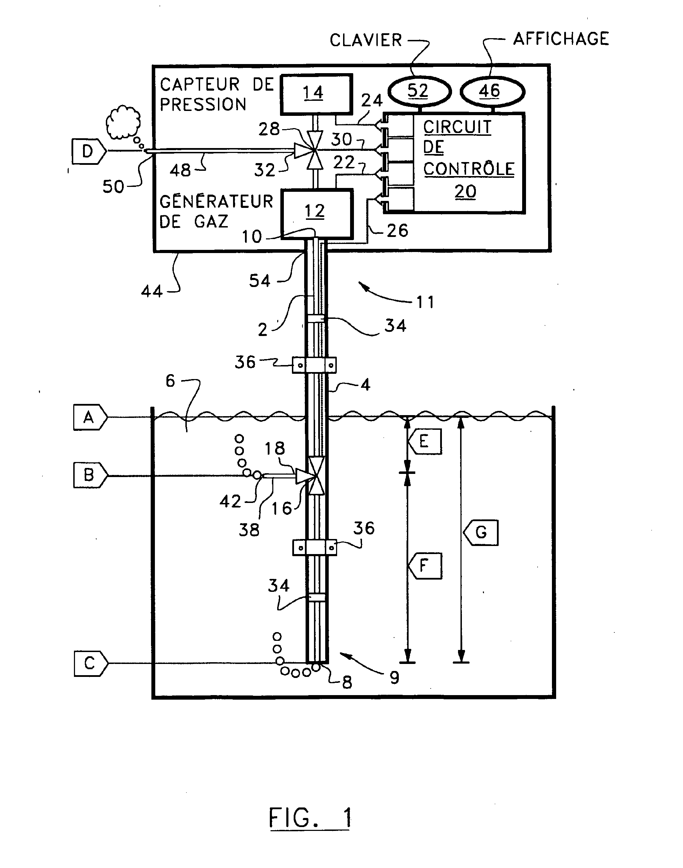

En référence à la figure 1, il est montré un limnimètre à bulles selon l'invention. Le limnimètre comporte un tube pneumatique 2 destiné à être immergé en partie dans un bassin d'eau 6, e.g. un lac ou un réservoir, ou tout autre liquide dont le niveau est à mesurer ou à surveiller. Le tube pneumatique 2 a des ouvertures inférieure et supérieure 8, 10 opposées. Un générateur de gaz 12, e.g. d'air, est connecté à l'ouverture supérieure 10 du tube 2. Un capteur de pression 14 est également connecté à l'ouverture supérieure 10 du tube, de manière à mesurer une pression dans le tube pneumatique 2.

Une valve de déviation 16 est interposée le long du tube pneumatique 2 au-dessus et à une distance prédéterminée de l'ouverture inférieure 8. La valve de déviation 16 a une ouverture de communication 18 avec un milieu extérieur liquide, e.g. l'eau 6, dans lequel une partie submergée 9 du tube pneumatique 2 se situe, et des positions fermée et ouverte dans lesquelles l'ouverture supérieure 10 du tube 2 communique respectivement avec l'ouverture inférieure 8 et l'ouverture de communication 18 de la valve 16. La fonction de la valve de déviation 16 est de permettre une vérification et optionnellement une correction / mise à jour du ou des coefficients d'étalonnage du capteur de pression 14. Davantage de détails au sujet du mode d'opération de la valve de déviation 16 sont fournis plus loin.

Un circuit de contrôle 20 est connecté au générateur de gaz 12, au capteur de pression 14 et à la valve de déviation 16, par exemple par l'entremise des lignes 22, 24, 26 respectivement. Le circuit de contrôle 20 est configuré pour traiter des mesures de pression obtenues du capteur de pression 14, commander la valve de déviation 16 et le générateur de gaz 12 en fonction de consignes préréglées, vérifier le coefficient d'étalonnage du capteur de pression 14 en fonction des mesures de pression obtenues du capteur 14 lorsque la valve de déviation 16 est alternativement en position fermée et en position ouverte et en fonction de la distance F entre l'ouverture inférieure 8 du tube pneumatique 2 et l'ouverture de communication 18 de la valve de déviation 16. Le circuit de contrôle 20 est aussi configuré pour générer des données de niveau en fonction des mesures de pression traitées et du coefficient d'étalonnage. Davantage de renseignements sur l'opération du circuit 20 sont fournis plus loin.

Une valve de déviation additionnelle 28 est préférablement interposée entre le capteur de pression 14 et l'ouverture supérieure 10 du tube pneumatique 2. La valve 28 est connectée au circuit de contrôle 20 par exemple par l'entremise de la ligne 30, et a une ouverture de communication 32 avec un milieu extérieur atmosphérique, e.g. l'air ambiant, dans lequel une partie émergée 11 du tube pneumatique 2 se situe, et des positions fermée et ouverte dans lesquelles le capteur de pression 14 communique respectivement avec l'ouverture supérieure 10 du tube 2 et l'ouverture de communication 32 de la valve 28. La fonction de la valve de déviation 28 est de permettre une vérification et optionnellement une correction / mise à jour du facteur de dérive du capteur de pression 14. Davantage de détails au sujet du mode d'opération de la valve de déviation 28 sont fournis plus loin. Le circuit de contrôle 20 est configuré pour commander la valve de déviation additionnelle 28 de la même manière que pour l'autre valve 16, et pour vérifier le facteur de dérive du capteur 14 en fonction des mesures de pression obtenues du capteur 14 lorsque la valve 28 est alternativement en position fermée et en position ouverte. Le circuit de contrôle 20 tient alors compte du facteur de dérive en générant les données de niveau.

L'assemblage et l'installation *in situ* des principales composantes de l'appareil sont simples et nécessitent peu d'espace. Pour obtenir une mesure du niveau d'eau G avec le limnimètre, le tube pneumatique 2 doit être immergé dans l'eau. Le tube 2 est abaissé à l'élévation minimum C que l'on veut mesurer dans le bassin ou réservoir d'eau 6. De préférence, le tube 2 est fixé solidement aux parois du bassin ou réservoir 6. La référence de l'extrémité inférieure du tube 2 est importante pour des résultats précis sur l'élévation finale de la mesure. L'extrémité inférieure du tube 2 devrait être libre de tout objet ou autre élément qui pourrait obstruer la sortie d'air 8.

Dans certains cas où l'environnement est hostile, le tube 2 sera de préférence protégé par une gaine ou un tube de protection 4, assurant qu'aucun objet ou débris n'endommage ou n'écrase le tube 2. Le tube pneumatique 2 peut être fixé au tube de protection 4 à l'aide de fixations 34 alors que le tube de protection 4 peut être fixé aux parois du bassin à l'aide d'autres fixations 36. De préférence, le tube de protection 4 ne devrait pas excéder l'extrémité inférieure du tube pneumatique 2.

L'ouverture supérieure 10 du tube pneumatique 2 est ensuite reliée au générateur d'air 12. La pression produite par le générateur d'air 12 devra être suffisante pour combattre la pression de l'eau qui est exercée à l'extrémité inférieure du tube pneumatique 2.

Le tube pneumatique 2 ainsi que le générateur d'air 12 sont reliés au capteur de pression 14 qui peut être électrique, électronique, pneumatique, ou d'autre type. Le capteur de pression 14 sera de préférence intégré, avec des composantes électroniques de contrôle schématisées par le circuit de contrôle 20, au limnimètre. Avec ces éléments ainsi assemblés, il devient possible d'obtenir une lecture de la pression qui est exercée à l'extrémité inférieure du tube pneumatique 2.

La pression d'air appliquée simultanément au capteur de pression 14 pourra être connue avec une très grande précision par injection d'une pression d'air égale ou équilibrée à la pression exercée par la colonne d'eau G au-dessus de l'ouverture inférieure 8 du tube pneumatique 2. Le moment précis d'équilibre entre la pression de l'eau située à l'ouverture inférieure 8 du tube pneumatique 2 et la pression d'air injectée dans le tube pneumatique 2, représente la mesure de niveau d'eau A. Cette pression sera transformée par la suite en une hauteur d'eau G se situant au-dessus de l'ouverture inférieure 8 formant la sortie d'air du tube pneumatique 2.

Un avantage du limnimètre réside dans le fait que toutes les composantes de précision de mesure se retrouvent à l'extérieur du bassin ou du réservoir d'eau 6 à mesurer. Le capteur de pression 14, les composantes électroniques de contrôle 20, le générateur d'air 12, etc., se situent à l'extérieur d'un milieu qui est très souvent hostile pour les diverses composantes qui constituent le limnimètre. Ainsi, il devient alors possible de contrôler les éléments qui nuisent généralement à la stabilité de ces composantes, comme la température, l'humidité, la corrosion, la vibration, etc., qui peuvent affecter la précision finale de la mesure du niveau A. Il est également très avantageux d'avoir les composantes à l'extérieur de l'eau 6 pour leur entretien et leur réparation s'il y a lieu.

Pour annuler la dérive dans le temps du capteur de pression 14, il s'agit de soumettre le capteur 14 à l'air libre D avant chaque prise de mesure de pression. Mesurant cette nouvelle lecture de dérive à l'air libre D, on peut mathématiquement et électroniquement annuler la différence que l'on peut avoir par rapport à la dérive initiale du capteur 14 ou encore mieux, soustraire cette dérive à la lecture finale de la pression mesurée par le capteur 14.

Pour ce qui est de l'étalonnage du capteur 14, il s'agit de se servir de la colonne d'eau F qui sera préétablie et maintenue pendant l'utilisation du limnimètre. Il faut comprendre que cette colonne d'eau F, connue par l'utilisateur lors de l'installation *in situ* de l'appareil, représente également une distance F entre deux points précis B, C situés à l'intérieur du bassin ou du réservoir d'eau 6. Cette distance F convertie en pression d'eau, déterminée à l'avance lors de l'installation initiale de l'appareil, permet de vérifier si la pression mesurée est correcte en fonction du coefficient de sensibilité original du capteur de pression 14.

La méthode proposée permet à l'utilisateur de vérifier si, pour une raison quelconque, le capteur de pression 14 a maintenu son coefficient de sensibilité original. À l'aide de cette méthode, l'utilisateur peut également connaître, avec précision, les erreurs de niveaux A engendrées par le coefficient de sensibilité. Cela représente un atout majeur pour les limnimètres à bulles. Ainsi, les corrections nécessaires peuvent être calculées de façon à obtenir une mesure de niveau A précise et exacte.

Pour réaliser cette vérification importante, il s'agit de dévier temporairement l'air de l'extrémité inférieure de la sortie 8 du tube pneumatique 2 à l'aide de l'électrovalve bidirectionnelle 16 ou tout autre dispositif qui assure le même résultat. L'électrovalve 16 assure deux fonctions importantes, à savoir qu'en position fermée, l'air injecté à l'intérieur du tube pneumatique 2 se rend totalement et uniquement à la sortie 8 du tube pneumatique 2 (principe de fonctionnement normal du limnimètre à bulles), et qu'en position ouverte, l'air injecté à l'intérieur du tube pneumatique 2 est dévié totalement et uniquement au niveau d'installation B de l'électrovalve 16.

L'électrovalve 16 permet d'obtenir une colonne de pression d'eau F de référence fixe. Cette distance F fixe entre deux points B,C différents de sortie d'air implique que la pression est toujours identique entre ces deux points de mesure à la condition que le niveau A de l'eau demeure le même pendant la lecture de ces deux points de mesure. En déviant la sortie d'air 8 à une distance connue F, il devient possible de vérifier le comportement du capteur de pression 14 pour une distance F déjà connue et établie lors de l'installation de l'appareil. Puisque la distance F entre la sortie d'air 8 par rapport à la sortie d'air 18 dévié à l'électrovalve 16 est connue, la mesure F peut être associée à une pression équivalente.

Grâce à cette méthode, on vérifie avec une grande exactitude que le coefficient de sensibilité original du capteur de pression 14 est valable. Cette vérification correspond à un seul palier de pression appliquée sur le capteur de pression 14. Avec cette méthode, on assume que le capteur de pression 14 est linéaire sur l'ensemble de sa pleine échelle. La linéarité d'un capteur de mesure de pression demeure généralement très bonne, sauf évidemment dans le cas où sa membrane de mesure a été déformée ou endommagée par des pressions qui dépassent sa pleine échelle de mesure. Étant donné que cette approche confirme un seul point de référence sur la courbe d'étalonnage original du capteur 14, on peut appliquer le même principe de déviation d'air sur plusieurs niveaux différents d'élévation, avec un seul et unique tube pneumatique 2. Il devient alors possible de vérifier si le capteur 14 est linéaire pour sa pleine échelle de mesure.

Avec le positionnement de l'électrovalve 16, il est possible, en plus de vérifier que le coefficient de sensibilité original du capteur 14 est demeuré intègre, d'établir dans la situation inverse, un nouveau coefficient de sensibilité pour le capteur 14. Cette même méthode de vérification permet également de déterminer l'erreur de lecture en pression ou de hauteur de niveau d'eau causée par un changement du coefficient de la sensibilité. La déviation d'air sur un même tube pneumatique 2 permet à l'utilisateur de vérifier et de connaître, avec précision et en tout temps, les erreurs produites sur la mesure de niveau de l'eau A.

La méthode de vérification et de correction du coefficient de sensibilité du capteur de pression 14, combinée à la possible correction de la dérive du capteur 14, est un moyen simple, efficace et peu coûteux de s'assurer de la validité de la lecture du capteur 14 avec toutes ses composantes situées à l'intérieur du limnimètre à bulles.

Le circuit de contrôle 20 peut être doté d'une mémoire destinée à l'emmagasinage des données de niveaux pour traitement ultérieur, et des consignes et/ou paramètres d'opérations du circuit 20. Le circuit de contrôle peut aussi être doté d'un organe d'affichage 46 pour afficher par exemple les résultats des mesures, les paramètres et modes d'opération du limnimètre, etc. Les composantes sensibles du limnimètre tels le générateur de gaz 12, le capteur de pression 14 et le circuit de contrôle 20 peuvent être disposées dans une enceinte 44 pour les protéger des intempéries. La sortie 32 de la valve 28 pourra alors être raccordée à un tube 48 sortant d'une ouverture latérale 50 de l'enceinte et donnant sur le milieu extérieur atmosphérique, tandis que le tube pneumatique 2 pourra être inséré dans une ouverture inférieure 54 de l'enceinte pour communiquer avec le générateur de gaz 12 et le capteur de pression 14.

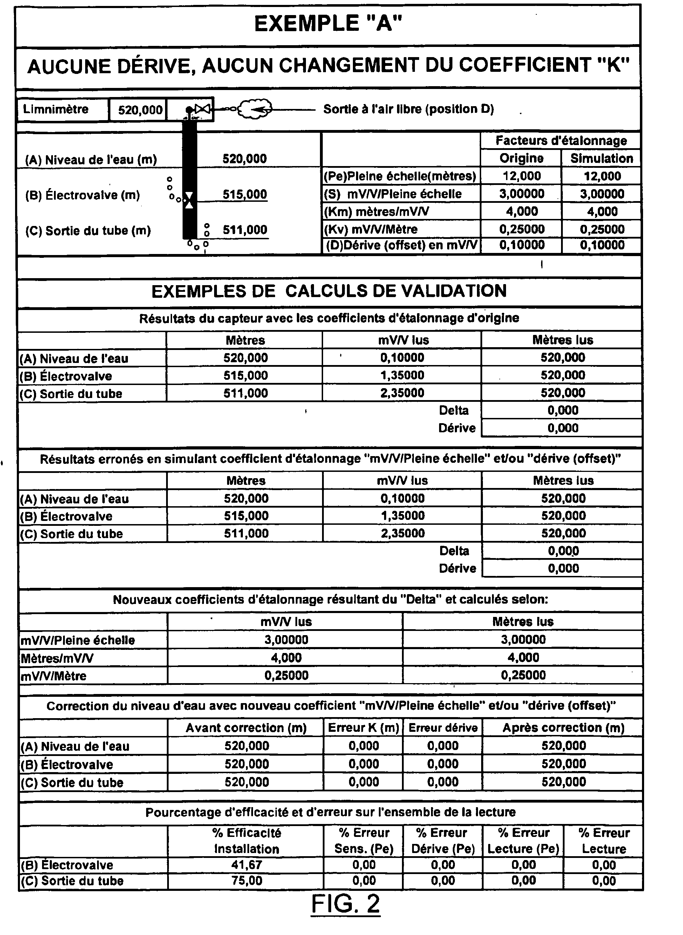

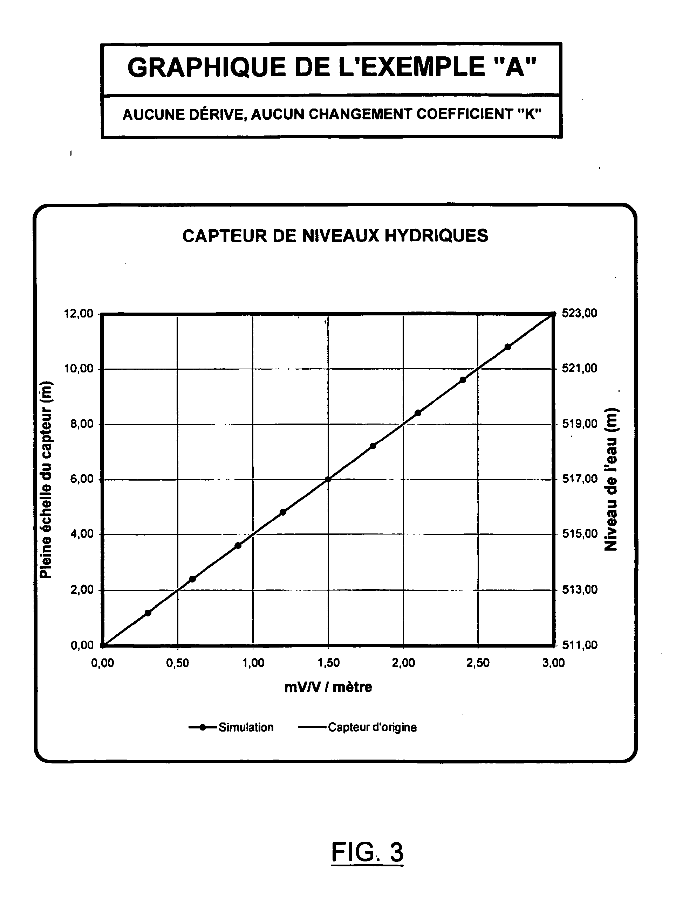

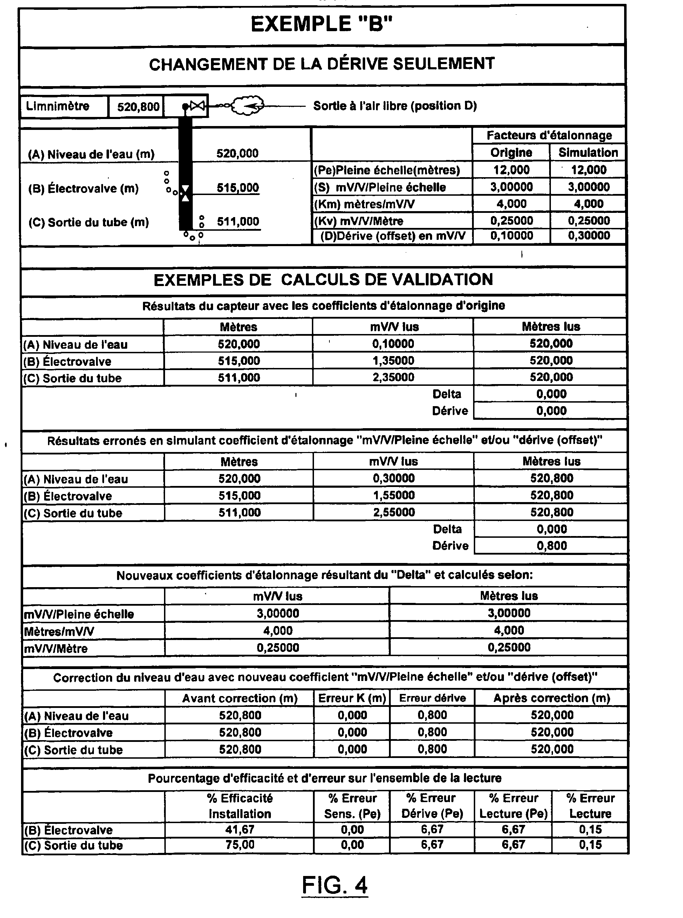

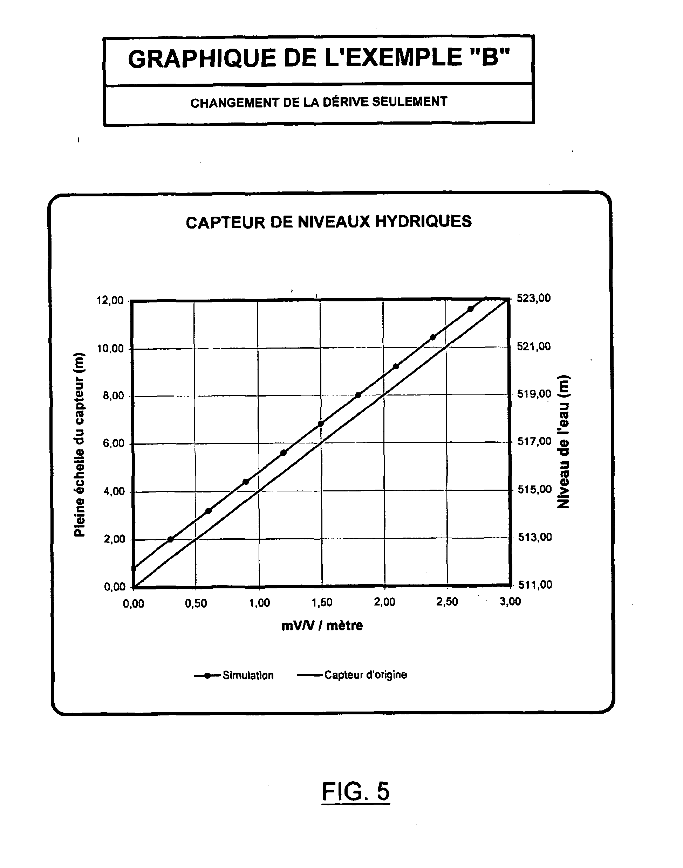

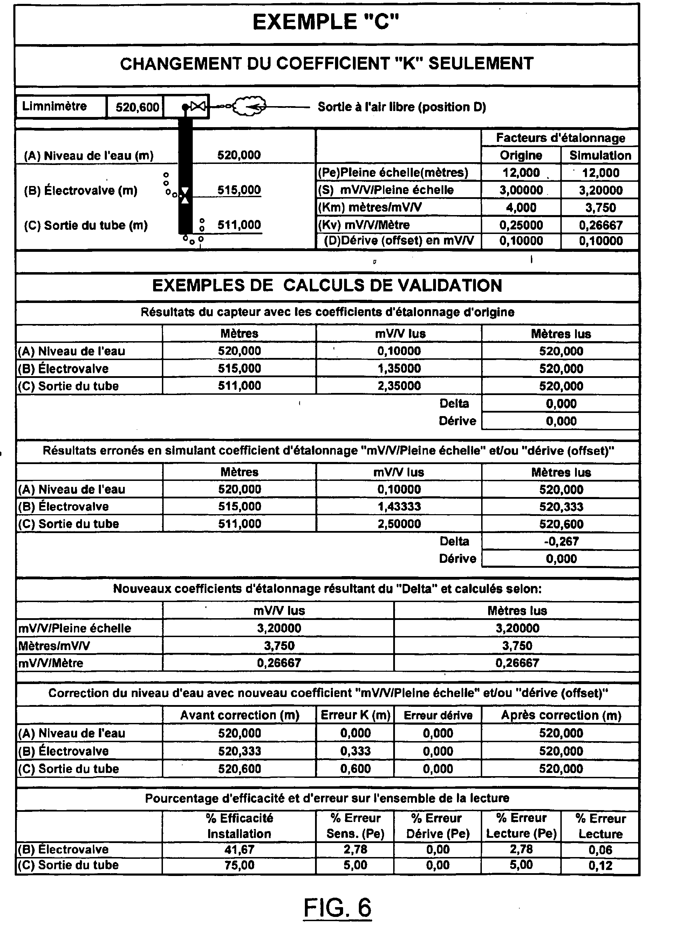

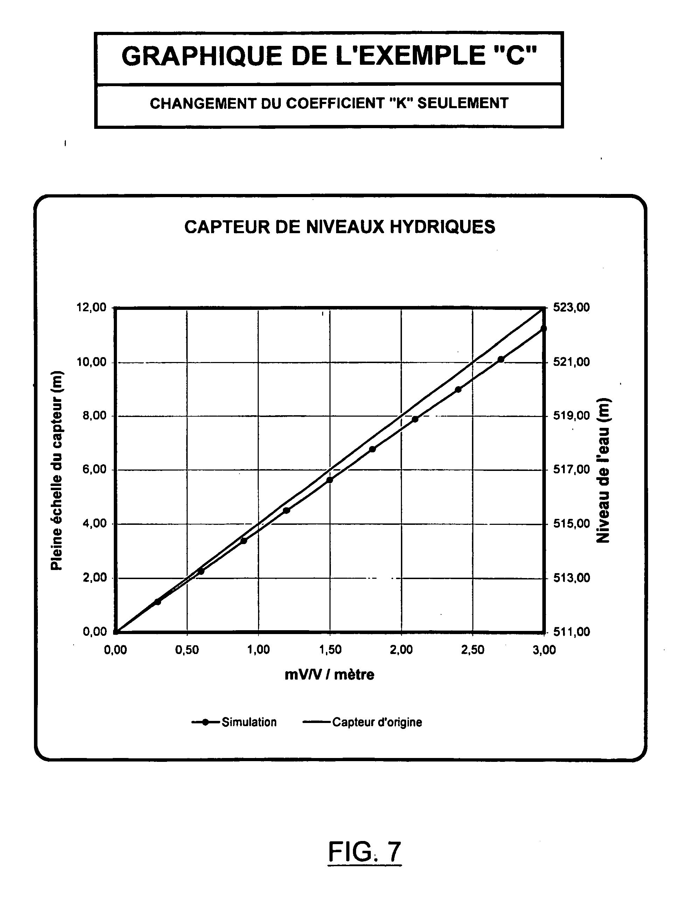

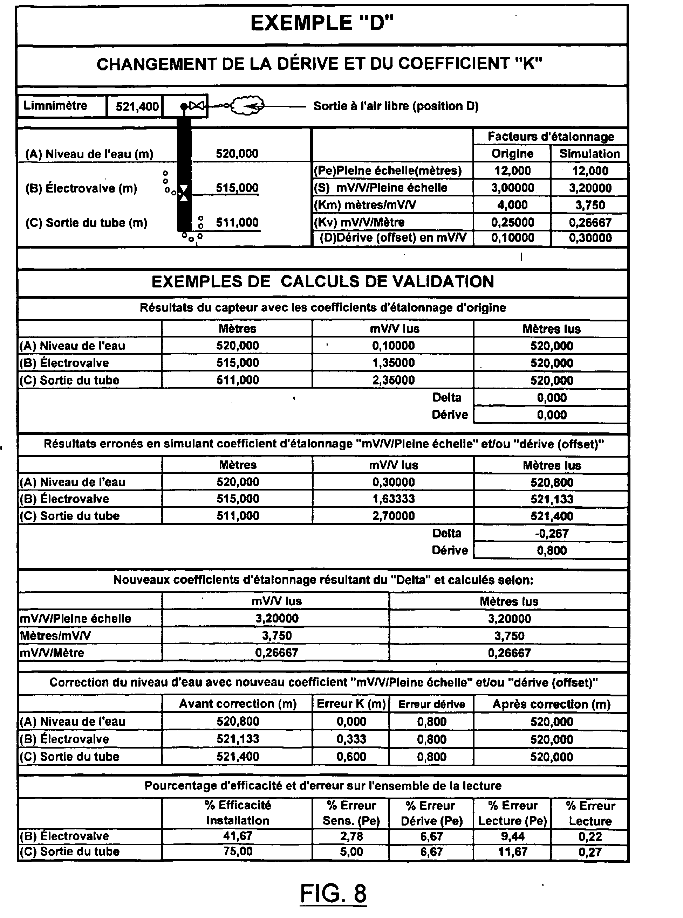

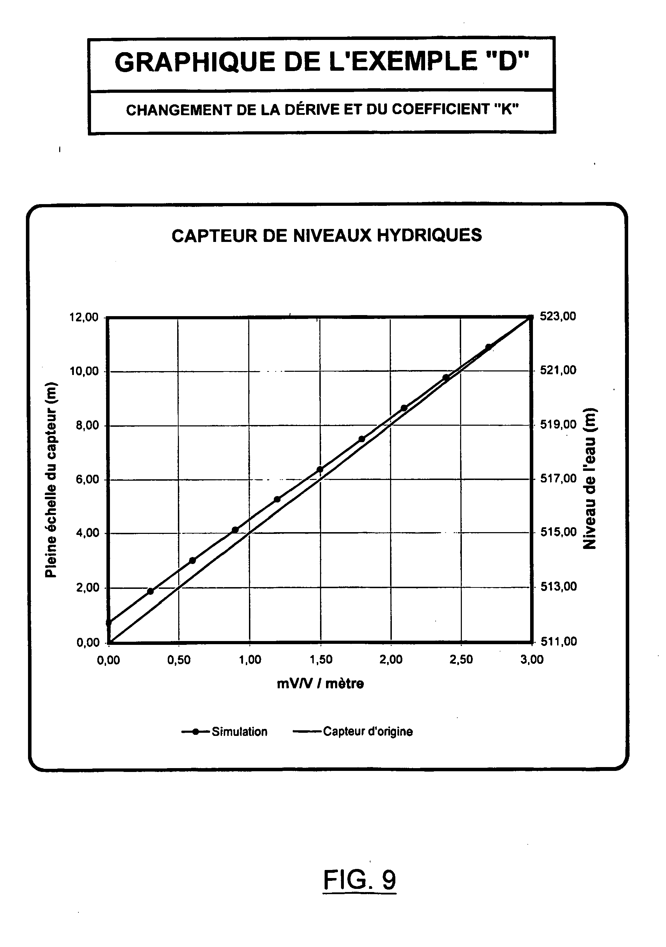

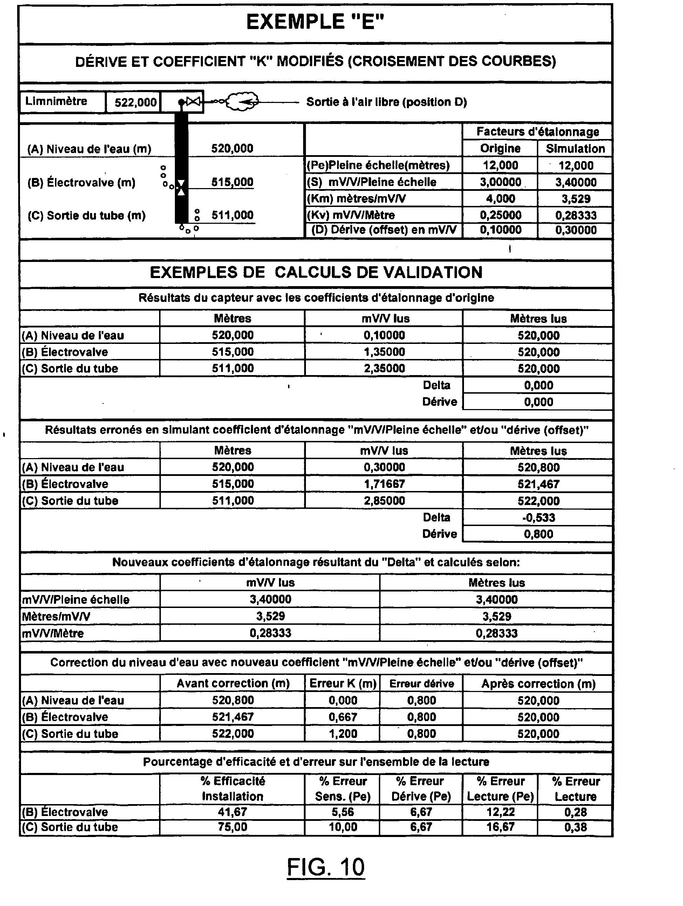

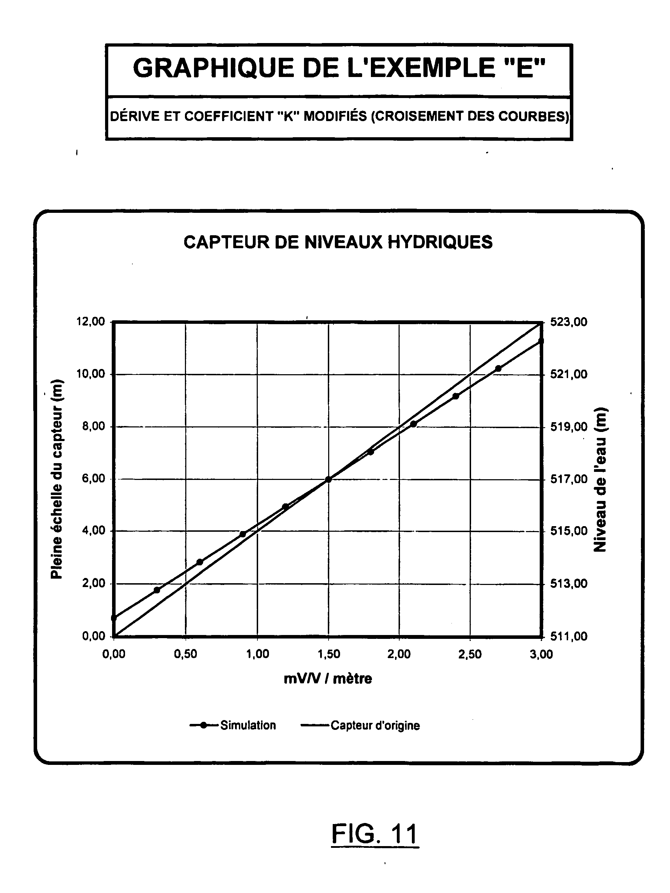

Les Figures 2 à 11 fournissent des exemples de calculs de niveaux d'eau, de coefficients d'étalonnage et de facteurs de dérive sous différentes conditions possibles du limnimètre selon l'invention. La Figure 2 montre des données typiques simulées lorsqu'il n'y a aucune dérive et aucun changement du coefficient d'étalonnage du capteur 14. La Figure 3 illustre les résultats obtenus avec (ligne avec points) et sans (ligne sans points) vérification de la dérive et du coefficient d'étalonnage du capteur 14 sous cette condition. La Figure 4 montre des données typiques simulées lorsqu'il y a un changement possible de la dérive seulement du capteur 14. La Figure 5 illustre les résultats obtenus avec (ligne avec points) et sans (ligne sans points) vérification de la dérive et du coefficient d'étalonnage du capteur 14 sous cette condition. La Figure 6 montre des données typiques simulées lorsqu'il y a un changement possible du coefficient d'étalonnage seulement du capteur 14. La Figure 7 illustre les résultats obtenus avec (ligne avec points) et sans (ligne sans points) vérification de la dérive et du coefficient d'étalonnage du capteur 14 sous cette condition. Les Figures 8 et 10 montrent des données typiques simulées lorsqu'il y a deux types de changements possibles de la dérive et du coefficient d'étalonnage du capteur 14. Les Figures 9 et 11 illustrent les résultats obtenus avec (ligne avec points) et sans (ligne sans points) vérification de la dérive et du coefficient d'étalonnage du capteur 14 sous ces conditions.

Les paramètres généralement établis par le manufacturier du capteur de pression 14 sont: la pleine échelle initiale $P_E$ ("full scale") du capteur (en mètres); la sensibilité initiale $S_0$ du capteur à pleine échelle (en mV/V); le coefficient d'étalonnage initial $K_{M_0}$ (en mètres/mV/V); et le coefficient d'étalonnage initial $K_{V_0}$ (en mV/V/mètre). Ces données de base sont initialement intégrées au limnimètre.

La précision du capteur 14 est directement reliée à la précision finale sur la mesure de niveau A. Le choix de la pleine échelle de mesure du capteur est également déterminant vis-à-vis la sensibilité désirée sur les variations du niveau de l'eau A. Il faut s'assurer d'avoir un bon rapport entre la pleine échelle de mesure du capteur 14 et le niveau maximum à mesurer. Si, pour différentes circonstances, ce rapport est trop bas, la précision finale dans la variation du niveau de l'eau A risque d'être affectée. Évidemment, toutes les composantes connexes qui alimentent ou contrôlent le capteur 14 doivent être choisies de façon à ne pas diminuer sa précision. Les composantes électroniques telles que: bloc d'alimentation, convertisseur analogique-numérique, convertisseur numérique-analogique, etc., doivent de préférence correspondre à des critères de sélection qui suivent de très près les caractéristiques originales du capteur de pression 14.

Les élévations $E_{A_0}$, $E_{B_0}$ et $E_{C_0}$ (en mètres) du niveau de l'eau, de l'électrovalve 16 et de la sortie 8 du tube 2, respectivement, doivent être mesurées à l'installation *in situ* du limnimètre. Ces élévations initiales des points de mesure, soit l'élévation B de l'électrovalve 16 et l'élévation C de l'extrémité inférieure 8 du tube pneumatique 2 sont à la base des calculs subséquents, afin d'obtenir une référence exacte sur le niveau d'eau A qui est à mesurer. Ces paramètres initiaux devraient de préférence être obtenus avec un système précis de mesure géodésique ou tout autre système qui pourra relier les élévations initiales des deux points de mesure B,C à une élévation de référence déjà établie.

Ces références d'élévations des points de mesure B,C ne doivent changer en aucun temps après l'installation de l'appareil. Ces élévations B,C sont les références auxquelles les hauteurs E,G des colonnes d'eau mesurées seront respectivement ajoutées afin d'obtenir l'élévation finale A du bassin ou réservoir d'eau 6. Tout changement d'élévation B,C pourrait entraîner une erreur sur le résultat final de la lecture de l'élévation de l'eau A ainsi que sur l'application de la correction du coefficient de sensibilité du capteur de pression 14.

Comme il est mentionné précédemment, le choix de la pleine échelle du capteur de pression 14 est déterminant pour la sensibilité finale des résultats. Le positionnement initial de la sortie d'air 8 à l'extrémité inférieure du tube pneumatique 2 sera donc en liaison directe avec ce choix de la pleine échelle de mesure du capteur 14. La position ou l'élévation C de l'extrémité inférieure du tube 2 indique la référence à laquelle on ajoutera la hauteur d'eau mesurée G qui se situe au-dessus de cette extrémité inférieure du tube 2. Le choix de l'élévation B de l'électrovalve 16 est déterminant pour l'application de la méthode de la déviation d'air située à l'électrovalve 16. Le point majeur et critique dans l'application de la méthode est que l'élévation B finale de l'électrovalve 16 doit demeurer en tout temps inférieure à l'élévation minimale du plan d'eau qui sera à mesurer. Le système de déviation d'air à l'électrovalve 16 devient non fonctionnel dans ce cas précis. Il est important de bien prévoir cette situation lors de l'installation initiale du système de mesure.

Pour que la vérification du coefficient de sensibilité du capteur de pression 14 soit la plus efficace possible, l'électrovalve 16 doit de préférence être installée le plus près possible de l'élévation minimale du bassin ou réservoir d'eau à mesurer. Ainsi installée, on obtient un excellent rapport d'efficacité vis-à-vis la pleine échelle du capteur de pression 14. Il faut bien comprendre que la distance d'installation F entre la sortie d'air 8 et la sortie d'air 18 représente la lecture de pression qui sera comparée pour vérifier le coefficient de sensibilité du capteur de pression 14. Donc, plus la distance F sera importante entre ces deux points de mesure, plus la lecture de pression sera représentative de la pleine échelle du capteur de pression 14.

Il est également possible avec la méthode de déviation d'air, d'ajouter une deuxième électrovalve (non illustrée), afin d'avoir une plus courte distance par rapport à l'extrémité inférieure de la sortie 8 du tube pneumatique 2. Ainsi, on pourrait vérifier le coefficient de sensibilité du capteur de pression 14 à des pressions minimales et maximales de la pleine échelle du capteur 14.

L'élévation D de la sortie à l'air libre 32 qui est en relation directe avec le facteur de dérive du capteur de pression 14, peut être considérée comme une valeur de référence pour l'appareil, car plusieurs solutions sont possibles pour corriger cette erreur de dérive. Un des moyens les plus efficaces pour annuler cette dérive du capteur de pression 14 est de soumettre ce même capteur 14 à l'air libre D, à l'aide de l'électrovalve bidirectionnelle 28. Cette méthode assure que le capteur 14 ne subit aucune pression, sauf celle de l'air ambiant où est situé l'appareil. Avec cette méthode, on s'assure que le capteur de pression 14 mesure une dérive initiale qui est causée uniquement par le changement de pression atmosphérique ou bien par des composantes reliées à ce même capteur de pression 14.

Plusieurs éléments, autres que la pression atmosphérique, peuvent contribuer à la dérive totale d'un limnimètre. Ces éléments de dérive sont souvent reliés à des contraintes mécaniques résiduelles du capteur de pression 14, des composantes électriques ou électroniques 20 de l'ensemble du système de mesure qui sont plus ou moins stables avec le temps d'utilisation, et une multitude d'autres points non négligeables pour l'obtention d'une mesure de pression précise. Même si on est capable mathématiquement d'annuler cette dérive avec l'aide de l'électrovalve 28 de déviation à l'air libre, il est bon de connaître la dérive initiale du capteur de pression 14. Cela permet de vérifier si le capteur de pression 14 ou les autres composantes auxiliaires reliées au capteur de pression 14 ont subi une dégradation durant la durée de vie de l'appareil.

Lors de l'installation du limnimètre, les lectures initiales du capteur de pression 14 sont des références importantes qui servent à vérifier que le capteur 14 fonctionne correctement sur le moment présent de son installation. Les lectures $L_{D_0}$, $L_{B_0}$ et $L_{C_0}$ (en mV/V) à l'air libre, à la sortie de l'électrovalve 16 et à la sortie 8 du tube 2 sont respectivement prises à cet effet.

La lecture initiale à l'air libre D peut être facultative dans le cas où l'appareil n'est pas doté d'une valve 28. On doit, dans ce cas précis, assumer que la dérive du capteur 14 et de ses composantes auxiliaires sera identique pour toute la durée de vie de l'appareil. Dans le cas où le capteur de pression 14 est remis à l'air libre D avant chaque prise de mesure, et que la lecture de la dérive ainsi obtenue est corrigée de la lecture finale du capteur 14, cette lecture de dérive devient une référence excessivement importante pour l'application des équations ci-après.

La lecture initiale *in situ* de la dérive est importante également dans le cas où l'on voudrait avoir un suivi de la dérive totale de l'ensemble de la mesure pendant toute la durée de vie de l'installation de l'appareil. C'est la solution préconisée et recommandée.

Pour bien vérifier le coefficient de sensibilité du capteur de pression 14, il est recommandé d'avoir une prise de lecture quasi instantanée entre la sortie 8 de l'extrémité inférieure du tube pneumatique 2 et la déviation d'air 18 de l'électrovalve 16. La séquence logique pour optimiser une prise de mesure à l'aide du circuit de contrôle ou microprocesseur 20 est importante. En mode de vérification, le microprocesseur 20 actionne l'électrovalve 28 de la sortie à l'air libre 32 en position ouverte. À ce moment précis, l'électrovalve 16 de la déviation d'air 42 du tube pneumatique 2 doit être en position fermée. Cela permet de maintenir la pression complète et existante à l'intérieur du tube pneumatique 2. Après une lecture de dérive du capteur de pression 14, le microprocesseur 20 actionne l'électrovalve 28 en position fermée. Ainsi, il sera possible d'obtenir une lecture de pression à l'extrémité inférieure du tube pneumatique 2. Enfin, le microprocesseur 20 actionne l'électrovalve 16 en position ouverte. Cette dernière action permet d'obtenir la pression de l'eau située au-dessus de la sortie du tube 38 de déviation d'air connecté à la sortie 18 de l'électrovalve 16. Après cette dernière séquence, le microprocesseur 20 remet l'électrovalve 16 en position fermée. Cela réinitialise l'appareil de mesure en position normale de lecture.

Une lecture à l'air libre $L_D$ est de préférence exécutée avant la lecture des deux points de mesure $L_B$ et $L_C$. Avec les équations ci-après, on assume que la dérive mesurée au capteur de pression 14 n'est pas différente entre le temps de lecture situé à l'extrémité inférieure C et la déviation d'air B. L'élévation du niveau de l'eau A (en mètres) d'après les lectures prises aux niveaux B et C pourra être calculée par:

$$E_{A_{B,C}} = \left( L_{B,C} - L_{D_0} \right) \times K_{M_0} + E_{B_0,C_0}$$

Un point important lors des prises de mesure à B et à C est que le niveau de l'eau A doit de préférence demeurer le plus stable possible durant cette période de mesure afin d'avoir une bonne précision lors de la vérification mathématique du coefficient de sensibilité. Une rapidité d'exécution entre les prises de lecture est de mise.

Après avoir obtenu deux lectures du niveau de l'eau A, on peut comparer immédiatement les résultats afin de constater si le coefficient de sensibilité original du capteur de pression 14 a varié. Le delta (en mètre) causé par la variation du coefficient d'étalonnage entre les deux niveaux de l'eau calculés $E_{A_B}$ et $E_{A_C}$ se calcule par:

$$\Delta E_{A_{BC}} = E_{A_B} - E_{A_C} = (L_B - L_C) \times K_{M_0} + E_{B_0} - E_{C_0}$$

Dans le cas où la différence obtenue entre les deux élévations mesurées est égale à zéro, on peut conclure que le coefficient de sensibilité original du capteur de pression 14 est demeuré exact. Par contre, si l'on obtient une différence entre les deux élévations mesurées non égale à zéro, on peut en déduire ou affirmer que le capteur de pression 14 a une erreur plus ou moins appréciable de son coefficient de sensibilité original. Cette valeur ne représente pas, à ce moment-ci, une erreur en mètres sur le résultat final de l'élévation A de la mesure de niveau.

Mathématiquement, on peut également affirmer que la différence de lecture de niveau entre l'extrémité inférieure de la sortie 8 du tube pneumatique 2 et la déviation d'air 18 de l'électrovalve 16 doit correspondre à la différence de l'élévation originale de d'installation B,C *in situ* des deux mêmes sorties d'air 8, 18 sur le tube pneumatique 2.

Avec ces vérifications, il est possible de corriger le coefficient de sensibilité avec les formules ci-après.

Suite à la vérification du coefficient de sensibilité, la dérive du capteur de pression 14 est vérifiée et calculée si l'on veut tenir compte de cette erreur dans les prochains calculs. Cela peut se faire par:

$\Delta D = D - D_0 = L_D - L_{D_0}$ en mV/V avec $D_0 = L_{D_0}$ représentant la dérive initiale du capteur, en mV/V, et $D = L_D$ représentant la dérive *in situ,* en mV/V.

Avec cette méthode de calcul, on assure un suivi de la dérive depuis l'installation du capteur 14 *in situ*, ou mieux encore, on peut voir l'évolution de la dérive depuis la fabrication de l'appareil. Les équations subséquentes indiquent une correction de la dérive depuis l'installation *in situ* de l'appareil.

Dans le cas où la différence entre la lecture de la dérive originale *in situ* et la lecture de la dérive actuelle est égale à zéro, cela indique que le capteur de pression 14 ainsi que toutes les autres composantes connexes ou auxiliaires reliées au capteur 14 sont demeurés identiques.

Par contre, si l'on obtient une valeur différente de zéro, on peut affirmer que le capteur 14 a une erreur plus ou moins appréciable sur le résultat final de la mesure de niveau de l'eau A. Cette valeur représente à ce moment-ci une différence en mV/V en trop ou en moins sur le résultat final de l'élévation de la mesure de niveau d'eau A.

Avec les vérifications faites précédemment, il devient possible d'associer un nouveau coefficient de sensibilité pour le capteur de pression 14, de corriger l'erreur de la dérive et de connaître toutes les erreurs associées à ces deux phénomènes de précision de l'appareil. Le calcul des nouveaux coefficients d'étalonnage peut se faire à l'aide des formules:

$$S = P_E \times \frac{(L_C - L_B)}{(E_{B_0} - E_{C_0})} \text{ ,}$$ S représentant la sensibilité du capteur recalculée sur la pleine échelle, en mV/V;

$$K_M = \frac{P_E}{S} = \frac{(E_{B_0} - E_{C_0})}{(L_C - L_B)} \text{ ,}$$

$K_M$ représentant le coefficient d'étalonnage recalculé, en mètres/mV/V; et

$$K_V = \frac{1}{K_M} \text{ ,}$$ $K_V$ représentant le coefficient d'étalonnage recalculé, en mV/V/mètre.

Avec ces équations, il est possible de calculer un nouveau coefficient de sensibilité pour le capteur de pression 14 par rapport à sa pleine échelle de mesure. Ces équations s'appuient sur le fait que la relation entre la différence de l'élévation C de l'extrémité inférieure de la sortie 8 du tube pneumatique 2 et l'élévation B de la déviation d'air 18 de l'électrovalve 16 ainsi que la différence entre la lecture obtenue de niveau A aux deux points de mesure devraient être identiques.

Les autres coefficients d'étalonnage peuvent être calculés sur le même principe. Il est possible de se servir uniquement du nouveau coefficient de sensibilité pour déterminer les autres coefficients d'étalonnage. C'est généralement cette méthode qui est utilisée par les manufacturiers de capteurs de pression.

Avec le nouveau coefficient de sensibilité et les autres coefficients d'étalonnage, on peut remplacer les coefficients d'origine de l'appareil si l'on désire que les lectures subséquentes de niveau A soient plus justes et précises.

Seule la valeur de la pleine échelle du capteur de pression 14 demeure intacte en tout temps.

L'erreur causée par la dérive du capteur 14 peut être exprimée facilement en mètres d'eau. Les équations ci-après tiennent compte du coefficient de sensibilité original du capteur de pression 14. Avec les équations suivantes, il est possible de calculer l'erreur en mètres due à une dérive du capteur de pression 14. Cette erreur en mètres se base sur le principe de la vérification établie *in situ* entre la lecture de la sortie à l'air libre D et la lecture initiale de la dérive du capteur 14:

$C_{DA}, C_{DB}, C_{DC} = \Delta D \times K_{M0} = (L_{D,B,C} - L_{D0}) \times K_{M0}$, $C_{DA}, C_{DB}, C_{DC}$ représentant les calculs d'erreur du niveau de l'eau A causée par la dérive du capteur avec des prises de lecture à l'air libre D et aux élévations B et C, respectivement (en mètres).

Les équations précédentes établissent une erreur en mètres reliée au coefficient de sensibilité original. L'erreur est présumée identique pour les deux points de mesure B,C dû au fait qu'une seule lecture de référence à l'air libre D a été réalisée (une valeur positive indique un niveau d'eau à la hausse). On assume également que le coefficient de sensibilité est demeuré le même entre le temps de la prise de mesure à l'air libre D et les autres points de mesure B,C.

Il est également possible de trouver mathématiquement l'erreur de niveau A de chaque prise de mesure due à un coefficient de sensibilité erroné. Avec les équations ci-après, il est possible de déterminer avec exactitude l'écart du niveau A mesuré à l'extrémité inférieure de la sortie 8 du tube pneumatique 2 ainsi qu'à la sortie d'air 18 dévié au moyen de l'électrovalve 16 (une valeur positive indique un niveau d'eau à la hausse):

$$C_{K_B} = \left(E_{A_B} - C_{D_B} - E_{B_O}\right) \times \frac{\left(E_{A_C} - E_{A_B}\right)}{\left(\left(E_{A_C} - E_{A_B}\right) - \left(E_{C_O} - E_{B_O}\right)\right)}, C_{K_B}$$

représentant le calcul de l'erreur du niveau de l'eau A causée par la variation du coefficient d'étalonnage calculée avec une prise de lecture en B, en mètres; et $\quad C_{K_C} = \left(E_{A_C} - C_{D_C} - E_{C_O}\right) \times \dfrac{\left(E_{A_C} - E_{A_B}\right)}{\left(\left(E_{A_C} - E_{A_B}\right) - \left(E_{C_O} - E_{B_O}\right)\right)}, \quad C_{K_C}$

représentant le calcul de l'erreur du niveau de l'eau A causée par la variation du coefficient d'étalonnage calculée avec une prise de lecture en C, en mètres.

Ces lectures tiennent compte de la dérive du capteur de pression 14. L'erreur produite par le calcul est uniquement due à un changement du coefficient de sensibilité du capteur 14. La lecture représente l'écart dont un utilisateur doit tenir compte dans sa lecture actuelle si le coefficient de sensibilité original n'a pas été remplacé par le nouveau coefficient de sensibilité d'étalonnage trouvé précédemment dans les équations.

Il est possible finalement de retrouver une élévation du niveau d'eau A corrigée en tenant compte des deux variantes possibles d'erreurs, soit le changement de coefficient de sensibilité et le facteur de dérive du capteur de pression 14:

$E_{ABN,CN} = E_{AB,C} - C_{KB,C} - C_{DB,C}$, $E_{ABN,CN}$ représentant l'élévation du niveau de l'eau A corrigée due à la dérive du capteur et/ou à la variation du coefficient d'étalonnage, calculée avec une prise de lecture en B et en C, respectivement, en mètres.

L'équation tient compte des deux corrections individuelles afin d'indiquer la bonne élévation de mesure du niveau de l'eau A. Ces lectures représentent le résultat de l'élévation finale et corrigée de l'eau A, dans le cas où le coefficient de sensibilité original n'a pas été remplacé par le nouveau coefficient de sensibilité d'étalonnage. L'erreur du facteur de dérive du capteur de pression 14 est maintenue tout au long de ce processus.

L'appareil pourra comporter un deuxième capteur de mesure avec son propre tube de liaison pneumatique possédant les mêmes caractéristiques que le capteur primaire (non illustré). Le but du deuxième point de mesure est essentiellement de valider la lecture du capteur primaire. L'opérateur pourra insérer à son gré une différence de niveau ou cote acceptable entre les lectures des capteurs, s'assurant ainsi d'une certaine validité de la lecture dans le cas où une lecture lui semblerait douteuse. Ce processus peut être géré par l'appareil lui-même, indiquant alors à l'opérateur si la lecture est bonne ou douteuse.

L'appareil permet ainsi d'avoir des lectures de niveaux précises et fiables, de minimiser les frais d'entretien à long terme de l'appareil de mesure, de minimiser les frais d'installation et de manutention de l'appareil de mesure. L'appareil pourra avoir une conception "hardware et software" qui répond aux critères de technologie des années 2000, et un excellent rapport qualité/prix.

L'appareil sera ainsi capable de corriger, électroniquement ou par méthodes de calcul préprogrammées, tous les impondérables qui peuvent affecter la précision de la lecture finale.

L'appareil pourra être réalisé de manière à permettre de aérer son autonomie sur piles rechargeables à différentes conditions d'usage exigées par l'utilisateur et de gérer les différents algorithmes de calculs nécessaires à son bon fonctionnement, d'établir une bonne gestion des données et des paramètres mémorisés, de faciliter une bonne communication à un ordinateur, d'être convivial dans tout son ensemble. L'appareil pourra avoir un boîtier étanche à l'eau, poussières, huiles, etc., avoir un seul et unique boîtier 44 en acier inoxydable ou aluminium peint ou PVC, avoir des serrures qui permettent la pose de cadenas (non illustré), avoir accès aux différentes lectures de niveaux par une fenêtre d'affichage, avoir des touches de clavier 52 étanches aux intempéries permettant aux utilisateurs de modifier les données de base de l'appareil, avoir des presse-étoupe pour toutes les entrées de câbles électriques ainsi que les tubes de sortie et d'entrée,' avoir un afficheur alphanumérique "LCD" 46 ou autre pour indiquer les cotes et autres paramètres en permanence. Il pourra être éclairé et chauffé si nécessaire. L'appareil complet devrait pouvoir fonctionner à des températures variant de -55 ˚C à +60 ˚C, et pouvoir s'installer autant sur un mur que sur un tuyau avec base. L'appareil de mesure pourra par exemple accepter une source d'alimentation de 120 VAC, accepter de fonctionner avec une pile externe de 12 VDC, permettre une source d'alimentation par panneaux solaires ou éoliennes, posséder tous les connecteurs ou terminaux relatifs à l'alimentation (120 VAC, 12 VDC, solaire et éolienne), posséder une sortie 12 volts DC avec terminal vissé, posséder une sortie 5 volts DC avec terminal vissé, posséder une pile rechargeable apte à supporter une perte d'alimentation principale pour une période minimale de sept (7) jours en fonction du mode d'opération déjà établi par l'utilisateur, posséder une faible consommation totale (mA) et être muni d'un dispositif "sleep mode" sur différentes composantes établies par l'utilisateur, posséder un dispositif automatique permettant de réduire la prise de lectures en cas de panne de secteur, posséder un dispositif d'alarme automatique en cas de panne de secteur, posséder des disjoncteurs mécaniques de protection sur l'entrée secteur 120 volts AC ainsi que sur l'alimentation 12 volts DC. L'appareil pourra être muni d'un générateur d'air comprimé capable de générer une pression suffisante pour toutes les plages de l'étendue de mesure mentionnée plus bas. Un dispositif manuel pourra également être prévu au cas où l'utilisateur opterait pour des bouteilles d'azote afin de générer la pression. L'appareil pourra contenir tous les raccords et valves nécessaires afin que l'utilisateur puisse choisir lui-même le mode d'opération qui lui convient (générateur d'air intégré ou bouteille d'azote).

Un dispositif automatique de transfert de pression pourra être installé entre le générateur d'air comprimé et les bouteilles d'azote afin de désactiver le générateur de pression dans la situation où l'état des piles rechargeables de l'appareil aurait atteint un seuil critique (Volt/Ampérage). Ce dispositif sera très utile plus spécifiquement avec l'alimentation par panneaux solaires ou éoliennes. Le même dispositif automatique de transfert de pression pourra servir dans le cas d'une panne du générateur d'air.

Plusieurs paramètres pourront être mesurés en temps réel, tel l'état de l'alimentation secteur en volts, l'état des piles rechargeables en volts, la température interne en ˚C, l'état de la réserve d'air en kPa, l'état de validité des capteurs, la cote relative ou absolue en mètres, la variation de la cote en mètres, le niveau relatif en mètres, le gradient sur la vitesse de variation en mètres/mm, la pression de la réserve d'air des bouteilles d'azote auxiliaires en kPa, etc.

Des paramètres de fonctionnement généraux pourront être utilisés, tels un numéro de version, une signature (nombre aléatoire représentant la configuration actuelle de l'appareil), un positionnement (coordonnées longitude et latitude), un emplacement (amont, aval, réservoir, etc.), un site (identification), une date d'installation, etc.

La conception ainsi que l'assemblage des différentes composantes pourront être réalisés de façon modulaire afin de pouvoir exécuter une maintenance rapide de l'appareil en cas de pannes majeures ou mineures. Les composantes électroniques peuvent être assemblées sur un circuit imprimé de type "surface mount".

L'appareil de base pourra être en mesure de communiquer avec un système informatique local (site) et de pouvoir également transmettre les informations de façon bidirectionnelle avec un ou des ordinateurs centraux à l'extérieur du site. Tous ces éléments pourront faire partie intégrante de l'appareil de mesure.

Avec ces caractéristiques ainsi que les performances techniques du limnimètre, la fiabilité de tout l'ensemble de l'appareil de mesure est améliorée de façon significative, en plus d'augmenter la sécurité des ouvrages et du public.

Bon nombre des limnimètres existants peuvent être adaptés selon l'invention, en ajoutant la valve 16 sur le tube 2 et en modifiant la programmation du circuit de contrôle 20 ou sinon en le changeant pour réaliser le mode de vérification décrit précédemment. La valve 28 peut également être ajoutée si nécessaire.

Bien que des réalisations de l'invention ont été illustrées dans les dessins ci-joints et décrites ci-dessus, il apparaîtra évident pour les personnes versés dans l'art que des changements et des modifications peuvent être apportés à ces réalisations sans s'écarter de l'essence de l'invention. Toutes modifications semblables ou variantes sont considérées comme étant à l'intérieur de la portée de l'invention telle que définie par les revendications ci-jointes.

**Revendications**

1. Limnimètre à bulles, comprenant i) un tube pneumatique (2) submersible en partie et ayant des ouvertures inférieure (8) et supérieure (10) opposées, ii) un générateur de gaz (12) connecté à l'ouverture supérieure (10) du tube pneumatique (2), iii) un capteur de pression (14) connecté à l'ouverture supérieure (10) du tube pneumatique (2) de manière à mesurer une pression dans ledit tube pneumatique (2), iv) une valve de déviation (16) ayant une ouverture de communication (18) avec un milieu extérieur (6), et présentant des positions fermée et ouverte, et v) un circuit de contrôle (20) connecté au générateur de gaz (12), au capteur de pression (14) et à la valve de déviation (16), et configuré pour a) traiter des mesures de pression obtenues du capteur de pression (14), b) commander la valve de déviation (16) et le générateur de gaz (12) en fonction de consignes préréglées, c) vérifier un coefficient d'étalonnage du capteur de pression (14) en fonction des mesures de pression obtenues du capteur de pression (14) lorsque la valve de déviation (16) est alternativement en position fermée et en position ouverte, et d) générer des données de niveau en fonction des mesures de pression traitées et du coefficient d'étalonnage, **caractérisé en ce que** ladite valve de déviation (16) est interposée le long dudit tube pneumatique (2) au-dessus et à une distance prédéterminée de l'ouverture inférieure (8), dispose d'une ouverture de communication (18) qui communique avec un milieu extérieur liquide (6) dans lequel une partie submergée (9) du tube pneumatique (2) se situe, et présente des positions fermée et ouverte dans lesquelles l'ouverture supérieure (10) du tube pneumatique (2) communique respectivement avec l'ouverture inférieure (8) du tube pneumatique (2) et l'ouverture de communication (18) de la valve de déviation (16), et **en ce que** ledit circuit de contrôle (20) est agencé pour vérifier ledit coefficient d'étalonnage du capteur de pression (14) en fonction en outre de la distance (F) entre l'ouverture inférieure (8) du tube pneumatique (2) et l'ouverture de communication (18) de la valve de déviation (16).

2. Limnimètre selon la revendication1, comprenant de plus :

   - une valve de déviation additionnelle (28) interposée entre le capteur de pression (14) et l'ouverture supérieure (10) du tube pneumatique (2), la valve de déviation additionnelle (28) étant connectée au circuit de contrôle (20) et ayant une ouverture de communication (32) avec un milieu extérieur atmosphérique dans lequel une partie émergée (11) du tube pneumatique (2) se situe, et des positions fermée et ouverte dans lesquelles le capteur de pression (14) communique respectivement avec l'ouverture supérieure (10) du tube pneumatique (2) et l'ouverture de communication (32) de la valve de déviation additionnelle (28);

   et dans lequel le circuit de contrôle (20) est aussi configuré pour :

   - commander la valve de déviation additionnelle (28) en fonction des consignes préréglées; et
   - vérifier un facteur de dérive du capteur de pression (14) en fonction des mesures de pression obtenues du capteur de pression (14) lorsque la valve de déviation additionnelle (28) est alternativement en position fermée et en position ouverte, les données de niveau générées par le circuit de contrôle (20) étant également en fonction du facteur de dérive.

3. Limnimètre selon la revendication 2, dans lequel le circuit de contrôle (20) comprend une mémoire d'emmagasinage des données de niveau.

4. Limnimètre selon la revendication 3, dans lequel les consignes préréglées sont aptes à être emmagasinées dans la mémoire.

5. Limnimètre selon la revendication 2, dans lequel les valves de déviation (16, 28) comprennent des électrovalves bi-directionnelles sous contrôle du circuit de contrôle (20).

6. Limnimètre selon la revendication 2, dans lequel le tube pneumatique (2) est muni d'un tube protecteur (4) entourant le tube pneumatique (2) sur une longueur du tube pneumatique (2).

7. Limnimètre selon la revendication 2, comprenant de plus une enceinte (44) dans laquelle le générateur de gaz (12), le capteur de pression (14) et le circuit de contrôle (20) sont montés, l'enceinte (44) ayant une ouverture inférieure (54) recevant une extrémité supérieure du tube pneumatique (2) comprenant l'ouverture supérieure (10), et une ouverture latérale (50) recevant un tube (48) reliant l'ouverture de communication (32) de la valve de déviation additionnelle (28) avec le milieu extérieur atmosphérique.

8. Limnimètre selon la revendication 1, dans lequel le circuit de contrôle (20) a :

   - un mode de mesure normale dans lequel le circuit de contrôle (20) est apte à régler la valve de déviation (16) en position fermée et le générateur de gaz (12) en opération pour combattre une pression hydrique dans le tube pneumatique (2) jusqu'à obtention d'une pression d'équilibre à l'ouverture inférieure (8) du tube pneumatique (2), et prendre une mesure de pression du capteur de pression (14) lorsque la pression d'équilibre est atteinte; et
   - un mode de vérification dans lequel le circuit de contrôle (20) est apte à régler la valve de déviation (16) le long du tube pneumatique (2) en position ouverte pour une durée préréglée, prendre une mesure de pression du capteur de pression (14) à l'ouverture de la valve de déviation (16), et déterminer le coefficient d'étalonnage en fonction de la mesure de pression.

**9.** Limnimètre selon la revendication 2, dans lequel le circuit de contrôle (20) a :

- un mode de mesure normale dans lequel le circuit de contrôle (20) est apte à régler les valves de déviation (16, 28) en position fermée et le générateur de gaz (12) en opération pour combattre une pression hydrique dans le tube pneumatique (2) jusqu'à obtention d'une pression d'équilibre à l'ouverture inférieure (8) du tube pneumatique (2), et prendre une mesure de pression du capteur de pression (14) lorsque la pression d'équilibre est atteinte;
- un premier mode de vérification dans lequel le circuit de contrôle (20) est apte à régler la valve de déviation (16) le long du tube pneumatique (2) en position ouverte pour une durée préréglée, prendre une mesure de pression du capteur de pression (14) à l'ouverture de la valve de déviation (16), et déterminer le coefficient d'étalonnage en fonction de la mesure de pression; et
- un deuxième mode de vérification dans lequel le circuit de contrôle (20) est apte à régler la valve de déviation additionnelle (28) entre l'ouverture supérieure (10) du tube pneumatique (2) et le capteur de pression (14) en position ouverte pour une durée préréglée, prendre une mesure de pression du capteur de pression (14) à l'ouverture de la valve de déviation additionnelle (28), et déterminer le facteur de dérive en fonction de la mesure de pression.

**10.** Limnimètre selon la revendication 9, dans lequel, dans le premier mode de vérification, le circuit de contrôle (20) est apte à s'assurer que la valve de déviation additionnelle (28) entre l'ouverture supérieure (10) du tube pneumatique (2) et le capteur de pression (14) est en position fermée avant l'ouverture de la valve de déviation (16) le long du tube pneumatique (2), et dans le deuxième mode de vérification, le circuit de contrôle (20) est apte à s'assurer que la valve de déviation (16) le long du tube pneumatique (2) est en position fermée avant l'ouverture de la valve de déviation additionnelle (28) entre l'ouverture supérieure (10) du tube pneumatique (2) et le capteur de pression (14).

**11.** Limnimètre selon la revendication 2, dans lequel le circuit de contrôle (20) est muni d'un affichage (46).

**12.** Limnimètre selon la revendication 1, comprenant de plus une valve de déviation supplémentaire interposée le long du tube pneumatique (2) entre l'ouverture inférieure (8) du tube pneumatique (2) et la valve de déviation (16) déjà en place, la valve de déviation supplémentaire ayant une ouverture de communication avec le milieu extérieur liquide (6), et des positions fermée et ouverte dans lesquelles l'ouverture supérieure (10) du tube pneumatique (2) communique respectivement avec l'ouverture inférieure (8) du tube pneumatique (2) et l'ouverture de communication de la valve de déviation supplémentaire, le circuit de contrôle (20) étant configuré pour opérer les valves de déviation (16) de manière indépendante.

**13.** Méthode pour améliorer des mesures de pression dans un limnimètre à bulles comportant

i) un tube pneumatique (2) submersible en partie et ayant des ouvertures inférieure (8) et supérieure (10) opposées,
ii) un générateur de gaz (12) connecté à l'ouverture supérieure (10) du tube pneumatique (2),
iii) un capteur de pression (14) connecté à l'ouverture supérieure (10) du tube pneumatique (2),
iv) une valve de déviation (16) ayant une ouverture de communication (18) avec un milieu extérieur (6), et présentant des positions fermée et ouverte, et
v) un circuit de contrôle (20) connecté au générateur de gaz (12) et au capteur de pression (14) et configuré pour traiter des mesures obtenues du capteur de pression (14) et générer des données de niveau en fonction des mesures traitées,

**caractérisée en ce qu'**elle comprend :

a) l'interposition de ladite valve de déviation (16) le long du tube pneumatique (2) au-dessus et à une distance prédéterminée de l'ouverture inférieure (8), avec son ouverture de communication (18) communiquant avec un milieu extérieur liquide (6) dans lequel une partie submergée (9) du tube pneumatique (2) se situe, et avec des positions fermée et ouverte dans lesquelles l'ouverture supérieure (10) du tube pneumatique (2) communique respectivement avec l'ouverture inférieure (8) du tube pneumatique (2) et l'ouverture de communication (18) de la valve de déviation (16),
b) la connexion de la valve de déviation (16) au circuit de contrôle (20);

c) la configuration du circuit de contrôle (20) pour :

- commander la valve de déviation (16) en fonction de consignes préréglées;
- vérifier un coefficient d'étalonnage du capteur de pression (14) en fonction de mesures de pression obtenues du capteur de pression (14) lorsque la valve de déviation (16) est alternativement en position fermée et en position ouverte et en fonction de la distance entre l'ouverture inférieure (8) du tube pneumatique (2) et l'ouverture de communication (18) de la valve de déviation (16); et
- générer les données de niveau en fonction en outre du coefficient d'étalonnage.

**14.** Méthode selon la revendication 13, comprenant de plus :

- interposer une valve de déviation additionnelle (28) entre le capteur de pression (14) et l'ouverture supérieure (10) du tube pneumatique (2), la valve de déviation additionnelle (28) ayant une ouverture de communication (32) avec un milieu extérieur atmosphérique dans lequel une partie émergée (11) du tube pneumatique (2) se situe, et des positions fermée et ouverte dans lesquelles le capteur de pression (14) communique respectivement avec l'ouverture supérieure (10) du tube pneumatique (2) et l'ouverture de communication (32) de la valve de déviation additionnelle (28);
- connecter la valve de déviation additionnelle (28) au circuit de contrôle (20); et
configurer le circuit de contrôle (20) pour :
- commander la valve de déviation additionnelle (28) en fonction des consignes préréglées;
- vérifier un facteur de dérive du capteur de pression (14) en fonction des mesures de pression obtenues du capteur de pression (14) lorsque la valve de déviation additionnelle (28) est alternativement en position fermée et en position ouverte; et
- générer les données de niveau en fonction du facteur de dérive.

**15.** Méthode selon la revendication 14, comprenant de plus :

- emmagasiner les données de niveau dans une mémoire du circuit de contrôle (20).

**16.** Méthode selon la revendication 14, dans laquelle le circuit de contrôle (20) effectue une mesure de niveau en procédant successivement par :

- un réglage de la valve de déviation additionnelle (28) entre le capteur de pression (14) et l'ouverture supérieure (10) du tube pneumatique (2) en position ouverte alors que la valve de déviation (16) le long du tube pneumatique (2) est en position fermée;
- une détermination du facteur de dérive du capteur de pression (14) en fonction d'une mesure obtenue du capteur de pression (14);
- un réglage de la valve de déviation additionnelle (28) entre le capteur de pression (14) et l'ouverture supérieure (10) du tube pneumatique (2) en position fermée;
- une mise en opération du générateur de gaz (12) pour combattre une pression liquide dans le tube pneumatique (2) jusqu'à obtention d'une pression d'équilibre à l'ouverture inférieure (8) du tube pneumatique (2);
- un traitement d'une première mesure obtenue du capteur de pression (14) correspondant à une lecture de pression à l'ouverture inférieure (8) du tube pneumatique (2);
- un réglage de la valve de déviation (16) le long du tube pneumatique (2) en position ouverte;
- un traitement d'une deuxième mesure obtenue du capteur de pression (14) correspondant à une lecture de pression à l'ouverture de communication (18) de la valve de déviation (16) le long du tube pneumatique (2);
- un réglage de la valve de déviation (16) le long du tube pneumatique (2) à nouveau en position fermée;
- une détermination du coefficient d'étalonnage en fonction d'une différence entre les première et deuxième mesures; et
- une génération des données de niveau d'après les mesures de pression en fonction du coefficient d'étalonnage et du facteur de dérive.

**Claims**

**1.** A bubble level meter, comprising i) a pneumatic tube (2) submersible in part and having opposite lower (8) and upper (10) openings, ii) a gas generator (12) connected to the upper opening (10) of the pneumatic tube (2), iii) a pressure sensor (14) connected to the upper opening (10) of the pneumatic tube (2) in order to measure a pressure in said pneumatic tube (2), iv) a deflection valve (16) having a port for communication (18) with an external milieu (6), and having closed and open positions, and v) a control circuit (20) connected to the gas generator (12), the pressure sensor (14) and the deflection valve (16), and configured for: a) processing pressure measurements obtained from the pressure sensor (14), b) controlling the deflection valve (16) and the gas generator (12) as a function of preset settings, c) verifying a calibration coefficient of the pressure sensor (14) as a function of the pressure measurements obtained from the pressure sensor (14) when the deflection valve (16) is alternately in closed position and in open position, and d) generating level data as a function of the processed pressure measurements and the calibration coefficient,

**characterized in that** said deflection valve (16) is interposed along the pneumatic tube (2) above and at a predetermined distance from the lower opening (8), has a communication port (18) that communicates with an external liquid milieu (6) in which a submerged portion (9) of the pneumatic tube (2) is located, and has closed and open positions wherein the upper opening (10) of the pneumatic tube (2) communicates respectively with the lower opening (8) of the pneumatic tube (2) and the communication port (18) of the deflection valve (16), and **in that** said control circuit (20) is arranged to verify said calibration coefficient of the pressure sensor (14) as a function also of the distance (F) between the lower opening (8) of the pneumatic tube (2) and the communication port (18) of the deflection valve (16).

2. The level meter according to claim 1, further comprising:

   - an additional deflection valve (28) interposed between the pressure sensor (14) and the upper opening (10) of the pneumatic tube (2), the additional deflection valve (28) being connected to the control circuit (20) and having a port for communication (32) with an external atmospheric milieu in which an emerged portion (11) of the pneumatic tube (2) is located, and closed and open positions wherein the pressure sensor (14) communicates respectively with the upper opening (10) of the pneumatic tube (2) and the communication port (32) of the additional deflection valve (28);

and wherein the control circuit (20) is also configured for:

   - controlling the additional deflection valve (28) as a function of the preset settings; and
   - verifying an offset factor of the pressure sensor (14) as a function of the pressure measurements obtained from the pressure sensor (14) when the additional deflection valve (28) is alternately in closed position and in open position, the level data generated by the control circuit (20) being also as a function of the offset factor.

3. The level meter according to claim 2, wherein the control circuit (20) comprises a memory for storing the level data.

4. The level meter according to claim 3, wherein the preset settings are storable in the memory.

5. The level meter according to claim 2, wherein the deflection valves (16, 28) comprise bidirectional solenoid valves under control of the control circuit (20).

6. The level meter according to claim 2, wherein the pneumatic tube (2) is provided with a protective tube (4) surrounding the pneumatic tube (2) over a length of the pneumatic tube (2).

7. The level meter according to claim 2, further comprising an enclosure (44) in which the gas generator (12), the pressure sensor (14) and the control circuit (20) are mounted, the enclosure (44) having a lower opening (54) receiving an upper end of the pneumatic tube (2) comprising the upper opening (10), and a lateral opening (50) receiving a tube (48) connecting the communication port (32) of the additional deflection valve (28) with the external atmospheric milieu.

8. The level meter according to claim 1, wherein the control circuit (20) has:

   - a normal measurement mode wherein the control circuit (20) is capable of setting the deflection valve (16) in closed position and the gas generator (12) in operation for opposing a hydric pressure in the pneumatic tube (2) until obtaining a balanced pressure at the lower opening (8) of the pneumatic tube (2), and taking a pressure measurement from the pressure sensor (14) when the balanced pressure is reached; and
   - a verification mode wherein the control circuit (20) is capable of setting the deflection valve (16) along the pneumatic tube (2) in open position for a preset duration, taking a pressure measurement from the pressure sensor (14) at the opening of the deflection valve (16), and determining the calibration coefficient as a function of the pressure measurement.

9. The level meter according to claim 2, wherein the control circuit (20) has:

- a normal measurement mode wherein the control circuit (20) is capable of setting the deflection valves (16, 28) in closed position and the gas generator (12) in operation for opposing a hydric pressure inside the pneumatic tube (2) until obtaining a balanced pressure at the lower opening (8) of the pneumatic tube (2), and taking a pressure measurement from the pressure sensor (14) when the balanced pressure is reached;
- a first verification mode wherein the control circuit (20) is capable of setting the deflection valve (16) along the pneumatic tube (2) in open position for a preset duration, taking a pressure measurement from the pressure sensor (14) at the opening of the deflection valve (16), and determining the calibration coefficient as a function of the pressure measurement; and
- a second verification mode wherein the control circuit (20) is capable of setting the additional deflection valve (28) between the upper opening (10) of the pneumatic tube (2) and the pressure sensor (14) in open position for a preset duration, taking a pressure measurement from the pressure sensor (14) at the opening of the additional deflection valve (28), and determining the offset factor as a function of the pressure measurement.

10. The level meter according to claim 9, wherein, in the first verification mode, the control circuit (20) is capable of ensuring that the additional deflection valve (28) between the upper opening (10) of the pneumatic tube (2) and the pressure sensor (14) is in closed position before the opening of the deflection valve (16) along the pneumatic tube (2), and in the second verification mode, the control circuit (20) is capable of ensuring that the deflection valve (16) along the pneumatic tube (2) is in closed position before the opening of the additional deflection valve (28) between the upper opening (10) of the pneumatic tube (2) and the pressure sensor (14).

11. The level meter according to claim 2, wherein the control circuit (20) is provided with a display (46).

12. The level meter according to claim 1, further comprising a supplementary deflection valve interposed along the pneumatic tube (2) between the lower opening (8) of the pneumatic tube (2) and the deflection valve (16) already in place, the supplementary deflection valve having a port for communication with the external liquid milieu (6), and closed and open positions wherein the upper opening (10) of the pneumatic tube (2) communicates respectively with the lower opening (8) of the pneumatic tube (2) and the communication port of the supplementary deflection valve, the control circuit (20) being configured for operating the deflection valves (16) independently.

13. A method for improving pressure measurements in a bubble level meter comprising

i) a pneumatic tube (2) submersible in part and having opposite lower (8) and upper (10) openings,
ii) a gas generator (12) connected to the upper opening (10) of the pneumatic tube (2),
iii) a pressure sensor (14) connected to the upper opening (10) of the pneumatic tube (2),
iv) a deflection valve (16) having a port for communication (18) with an external milieu (6), and having closed and open positions, and
v) a control circuit (20) connected to the gas generator (12) and the pressure sensor (14) and configured for processing measurements obtained from the pressure sensor (14) and generating level data as a function of the processed measurements,

**characterized in that** it comprises:

a) the interposition of a deflection valve (16) along the pneumatic tube (2) above and at a predetermined distance from the lower opening (8), with its communication port (18) communicating with an external liquid milieu (6) in which a submerged portion (9) of the pneumatic tube (2) is located, and with closed and open positions wherein the upper opening (10) of the pneumatic tube (2) communicates respectively with the lower opening (8) of the pneumatic tube (2) and the communication port (18) of the deflection valve (16);
b) the connection of the deflection valve (16) to the control circuit (20);
c) the configuration of the control circuit (20) for:

- controlling the deflection valve (16) as a function of preset settings;
- verifying a calibration coefficient of the pressure sensor (14) as a function of pressure measurements obtained from the pressure sensor (14) when the deflection valve (16) is alternately in closed position and in open position and as a function of the distance between the lower opening (8) of the pneumatic tube (2)

EP 1 366 342 B1

and the communication port (18) of the deflection valve (16); and
- generating the level data as a function of the calibration coefficient.

**14.** The method according to claim 13, further comprising:

- interposing an additional deflection valve (28) between the pressure sensor (14) and the upper opening (10) of the pneumatic tube (2), the additional deflection valve (28) having a port for communication (32) with an external atmospheric milieu in which an emerged portion (11) of the pneumatic tube (2) is located, and closed and open positions wherein the pressure sensor (14) communicates respectively with the upper opening (10) of the pneumatic tube (2) and the communication port (32) of the additional deflection valve (28);
- connecting the additional deflection valve (28) to the control circuit (20); and
- configuring the control circuit (20) for:

- controlling the additional deflection valve (28) as a function of the preset settings;
- verifying an offset factor of the pressure sensor (14) as a function of the pressure measurements obtained from the pressure sensor (14) when the additional deflection valve (28) is alternately in closed position and in open position; and
- generating the level data as a function of the offset factor.

**15.** The method according to claim 14, further comprising:

- storing the level data in a memory of the control circuit (20).

**16.** The method according to claim 14, wherein the control circuit (20) performs a level measurement by proceeding successively by:

- a setting of the additional deflection valve (28) between the pressure sensor (14) and the upper opening (10) of the pneumatic tube (2) into open position when the deflection valve (16) along the pneumatic tube (2) is in closed position;
- a determination of the offset factor of the pressure sensor (14) as a function of a measurement obtained from the pressure sensor (14);
- a setting of the additional deflection valve (28) between the pressure sensor (14) and the upper opening (10) of the pneumatic tube (2) in closed position;
- a setting into operation of the gas generator (12) for opposing a liquid pressure in the pneumatic tube (2) until obtaining a balanced pressure at the lower opening (8) of the pneumatic tube (2);
- a processing of a first measurement obtained from the pressure sensor (14) corresponding to a reading of pressure at the lower opening (8) of the pneumatic tube (2);
- a setting of the deflection valve (16) along the pneumatic tube (2) in open position;
- a processing of a second measurement obtained from the pressure sensor (14) corresponding to a reading of pressure at the communication port (18) of the deflection valve (16) along the pneumatic tube (2);
- a setting of the deflection valve (16) along the pneumatic tube (2) back in closed position;
- a determination of the calibration coefficient as a function of a difference between the first and second measurements; and
- a generation of the level data based on the pressure measurements as a function of the calibration coefficient and of the offset factor.

**Patentansprüche**

**1.** Pneumatischer Füllstandsmesser, umfassend: i) ein partiell eingetauchtes pneumatisches Rohr (2) mit entgegengesetzten Öffnungen, unten (8) und oben (10), ii) einen an die obere Öffnung (10) des pneumatischen Rohrs (2) angeschlossen Gasgenerator (12), iii) einen mit der oberen Öffnung (10) des pneumatischen Rohrs (2) verbundenen Druckfühler (14), um in dem pneumatischen Rohr (2) einen Druck zu messen, iv) ein Abzweigventil (16) mit einer Verbindungsöffnung (18) zu einem Außenmedium (6) und mit "Zu"- und "Offen"-Stellungen, und v) eine Steuerschaltung (20), verbunden mit dem Gasgenerator (12), dem Druckgenerator (14) und dem Abzweigventil (16), und konfiguriert um: a) Druckmessungen des Druckfühlers (14) zu verarbeiten, b) das Abzweigventil (16) und den Gasgenerator (12) entsprechend vorprogrammierter Sollwerte zu steuern, c) einen Eichkoeffizienten des Druckfühlers (14) entsprechend der durch den Druckfühler (14) gemachten Druckmessungen zu verifizieren, wenn das

17

Abzweigventil (16) sich wechselweise in "Zu"- und "Offen"-Stellung befindet, und d) Füllstandsdaten als Funktion der verarbeiteten Druckmessungen und des Eichkoeffizienten zu generieren, **dadurch gekennzeichnet, dass** das genannte Abzweigventil (16) mit einem vorgegebenen Abstand über der unteren Öffnung (8) in das pneumatische Rohr (2) eingebaut ist und eine Verbindungsöffnung (18) hat, die mit einem flüssigen Außenmedium (6) kommuniziert, in das ein Teil (9) des pneumatischen Rohrs (2) eingetaucht ist, und "Zu"- und "Offen"-Stellungen aufweist, in denen die obere Öffnung (10) des pneumatischen Rohrs (2) jeweils mit der unteren Öffnung (8) des pneumatischen Rohrs (2) und mit der Verbindungsöffnung (18) des Abzweigventils (16) kommuniziert, und **dadurch, dass** die genannte Steuerschaltung (20) fähig ist, den genannten Eichkoeffizienten des Druckfühlers (14) außerdem als Funktion des Abstands (F) zwischen der unteren Öffnung (8) des pneumatischen Rohrs (2) und der Verbindungsöffnung (18) des Abzweigventils (16) zu verifizieren.

2. Füllstandsmesser nach Anspruch 1, außerdem umfassend:

- ein Zusatz-Abzweigventil (28), eingebaut zwischen dem Druckfühler (14) und der oberen Öffnung (10) des pneumatischen Rohrs (2), wobei das Zusatz-Abzweigventil (28) mit der Steuerschaltung (20) verbunden ist und eine Verbindungsöffnung (32) zu einer atmosphärischen Umgebung, in der sich ein nichteingetauchter Teil (11) des pneumatischen Rohrs (2) befindet, und "Zu"- und "Offen"-Stellungen hat, in denen der Druckfühler (14) jeweils mit der oberen Öffnung (10) des pneumatischen Rohrs (2) und der Verbindungsöffnung (32) des Zusatz-Abzweigventils (28) kommuniziert;

und bei dem die Steuerschaltung (20) außerdem fähig ist:

- das Zusatz-Abzweigventil (28) entsprechend vorprogrammierter Sollwerte zu steuern; und
- einen Abweichungsfaktor des Druckfühlers (14) als Funktion der von dem Druckfühler (14) erhaltenen Druckmessungen zu verifizieren, wenn das Zusatz-Abzweigventil (28) wechselweise in "Zu"- und "Offen"-Stellung ist, wobei die durch die Steuerschaltung (20) generierten Füllstandsdaten ebenfalls eine Funktion des Abweichungsfaktors sind.

3. Füllstandsmesser nach Anspruch 2, bei dem die Steuerschaltung (20) einen Füllstandsdaten-Aufbewahrungsspeicher umfassen.

4. Füllstandsmesser nach Anspruch 3, bei dem die vorprogrammierten Sollwerte geeignet sind, in dem Speicher aufbewahrt zu werden.

5. Füllstandsmesser nach Anspruch 2, bei dem die Abzweigventile (16, 28) durch die Steuerschaltung (20) gesteuerte Zweirichtungs-Elektroventile umfassen.

6. Füllstandsmesser nach Anspruch 2, bei dem das pneumatische Rohr (2) ein das pneumatische Rohr (2) über eine Länge des pneumatischen Rohrs (2) umgebendes Schutzrohr (4) umfasst.

7. Füllstandsmesser nach Anspruch 2, außerdem eine Kammer (44) umfassend, in der sich der Gasgenerator (12), der Druckfühler (14) und die Steuerschaltung (20) befinden, wobei die Kammer (44) eine untere Öffnung (54) zur Aufnahme des die obere Öffnung (10) des oberen Endes des pneumatischen Rohrs (2) und eine seitliche Öffnung (50) hat, die ein Rohr (48) aufnimmt, das die Verbindungsöffnung (32) des Zusatz-Abzweigventils (28) mit der Außenluft verbindet.

8. Füllstandsmesser nach Anspruch 1, dessen Steuerschaltung (20) umfasst:

- einen Normalmessungsmodus, in dem die Steuerschaltung (20) fähig ist, das Abzweigventil (16) in die "Zu"-Stellung zu stellen und den Gasgenerator (12) einzuschalten, um einem Wasserdruck in dem pneumatischen Rohr (2) entgegenzuwirken bis zum Erreichen eines Gleichgewichtsdrucks an der unteren Öffnung (8) des pneumatischen Rohrs (2), und bei Erreichen des Gleichgewichtsdrucks einen Druckmesswert des Druckfühlers (14) abzugreifen; und
- einen Verifizierungsmodus, in dem die Steuerschaltung (20) fähig ist, das Abzweigventil (16) in dem pneumatischen Rohr (2) für eine vorprogrammierte Dauer zu öffnen, bei offenem Abzweigventil (16) eine Druckmessung des Druckfühlers (14) abzugreifen und den Eichkoeffizienten in Abhängigkeit von der Druckmessung zu bestimmen.

9. Füllstandsmesser nach Anspruch 2, bei dem die Steuerschaltung (20) umfasst:

- einen Normalmessungsmodus, bei dem die Steuerschaltung (20) fähig ist, die Abzweigventile (16, 28) zu schließen und den Gasgenerator (12) einzuschalten, um einem Wasserdruck in dem pneumatischen Rohr (2) entgegenzuwirken bis zum Erreichen eines Gleichgewichtsdrucks an der unteren Öffnung (8) des pneumatischen Rohrs (2), und bei Erreichen des Gleichgewichtsdrucks einen Druckmesswert des Druckfühlers (14) abzugreifen;
- einen ersten Verifizierungsmodus, bei dem die Steuerschaltung (20) fähig ist, das Abzweigventil (16) in dem pneumatischen Rohr (2) für eine vorprogrammierte Dauer zu öffnen, bei offenem Abzweigventil (16) eine Druckmessung des Druckfühlers (14) abzugreifen und den Eichkoeffizienten in Abhängigkeit von der Druckmessung zu bestimmen; und
- einen zweiten Verifizierungsmodus, bei dem die Steuerschaltung (20) fähig ist, das Zusatz-Abzweigventil (18) zwischen der oberen Öffnung des pneumatischen Rohrs (2) und dem Druckfühler (14) für eine vorprogrammierte Dauer zu öffnen, bei offenem Zusatz-Abzweigventil (28) eine Druckmessung des Druckfühlers (14) abzugreifen und den Abweichungsfaktor entsprechend der Druckmessung zu bestimmen.

10. Füllstandsmesser nach Anspruch 9, bei dem die Steuerschaltung (20) im ersten Verifizierungsmodus fähig ist, sich zu versichern, dass das Zusatz-Abzweigventil (28) zwischen der oberen Öffnung (10) des pneumatischen Rohrs (2) und dem Druckfühler (14) vor dem Öffnen des Abzweigventils (16) in dem pneumatischen Rohr (2) in der "Zu"-Stellung ist, und im zweiten Verifizierungsmodus fähig ist, sich zu versichern, dass das Abzweigventil (16) in dem pneumatischen Rohr (2) vor dem Öffnen des Zusatz-Abzweigventils (28) zwischen der oberen Öffnung (10) des pneumatischen Rohrs (2) und dem Druckfühler (14) in der "Zu"-Stellung ist.

11. Füllstandsmesser nach Anspruch 2, bei dem die Steuerschaltung (20) eine Anzeige (46) umfasst.

12. Füllstandsmesser nach Anspruch 1 mit einem weiteren Abzweigventil, eingebaut in das pneumatische Rohr (2) zwischen der unteren Öffnung (8) des pneumatischen Rohrs (2) und dem schon eingebauten Abzweigventil (16), wobei das weitere Abzweigventil eine Verbindungsöffnung zu dem flüssigen Umgebungsmedium (6) hat, und "Zu"- und "Offen"-Stellungen hat, in denen die obere Öffnung (10) des pneumatischen Rohrs (2) jeweils mit der unteren Öffnung (8) des pneumatischen Rohrs (2) und der Verbindungsöffnung des weiteren Abzweigventil kommuniziert, und die Steuerschaltung (20) dabei konfiguriert ist, um die Abzweigventile (16) auf unabhängige Weise zu steuern.

13. Verfahren zur Verbesserung der Druckmessungen eines pneumatischen Füllstandsmessers, der umfasst:

i) ein partiell eingetauchtes pneumatisches Rohr (2) mit entgegengesetzten Öffnungen, unten (8) und oben (10),
ii) einen an die obere Öffnung (10) des pneumatischen Rohrs (2) angeschlossen Gasgenerator (12),
iii) einen mit der oberen Öffnung (10) des pneumatischen Rohrs (2) verbundenen Druckfühler (14), um in dem pneumatischen Rohr (2) einen Druck zu messen,
iv) ein Abzweigventil (16) mit einer Verbindungsöffnung (18) zu einem Außenmedium (6) und mit "Zu"- und "Offen"-Stellungen, und
v) eine Steuerschaltung (20), verbunden mit dem Gasgenerator (12) und dem Druckgenerator (14), und konfiguriert, um von dem Druckfühler (14) erhaltene Messwerte zu verarbeiten und in Abhängigkeit von den verarbeiteten Messwerten Füllstandsdaten zu generieren,

**dadurch gekennzeichnet, dass** es umfasst:

a) die Zwischenschaltung des genannten Abzweigventils (16) in dem pneumatischen Rohr mit einem vorgegebenen Abstand über der unteren Öffnung (8), so dass die Verbindungsöffnung (18) mit einem flüssigen Außenmedium (6) kommuniziert, in dem sich ein eingetauchter Teil (9) des pneumatischen Rohrs (2) befindet, und mit "Zu"- und "Offen"-Stellungen, in denen die obere Öffnung (10) des pneumatischen Rohrs (2) jeweils mit der unteren Öffnung (8) des pneumatischen Rohrs (2) und mit der Verbindungsöffnung (18) des Abzweigventils (16) kommuniziert,
b) die Verbindung des Abzweigventils (16) mit der Steuerschaltung (20);
c) die Konfigurierung der Steuerschaltung (20) für:

- Steuerung des Abzweigventils (16) entsprechend der vorprogrammierten Sollwerte;
- Verifizierung eines Eichkoeffizienten des Druckfühlers (14) in Abhängigkeit von den von dem Druckfühler (14) erhaltenen Druckmesswerten, wenn das Abzweigventil (16) wechselweise in "Zu"- und "Offen"-Stellung ist, sowie in Abhängigkeit von dem Abstand zwischen der unteren Öffnung (8) des pneumatischen Rohrs (2) und der Verbindungsöffnung (18) des Abzweigventils (16); und
- Generierung der Füllstandsdaten außerdem in Abhängigkeit von dem Eichkoeffizienten.

**14.** Verfahren nach Anspruch 13, zudem umfassend:

- Zwischenschaltung eines Zusatz-Abzweigventils (28) zwischen dem Druckfühler (14) und der oberen Öffnung (10) des pneumatischen Rohrs (2), wobei das Zusatz-Abzweigventil (28) eine Verbindungsöffnung (32) zu einer atmosphärischen Umgebung hat, in der sich ein nichteingetauchter Teil (11) des pneumatischen Rohrs (2) befindet, und "Zu"- und "Offen"-Stellungen hat, in denen der Druckfühler (14) jeweils mit der oberen Öffnung (10) des pneumatischen Rohrs (2) und der Verbindungsöffnung (32) des Zusatz-Abzweigventils (28) kommuniziert;
- Verbindung des Zusatz-Abzweigventils (28) mit der Steuerschaltung (20); und Konfiguration der Steuerschaltung (20), für:
- Steuerung des Zusatz-Abzweigventils (28) entsprechend vorprogrammierter Sollwerte;
- Verifizierung eines Abweichungsfaktors des Druckfühlers (14) entsprechend der von dem Druckfühler (14) erhaltenen Druckmessungen, wenn das Zusatz-Abzweigventil (28) wechselweise in "Zu"- und "Offen"-Stellung ist; und
- Generierung von Füllstandsdaten in Abhängigkeit von dem Abweichungsfaktor.

**15.** Verfahren nach Anspruch 14, außerdem umfassend:

- Aufbewahrung der Daten in einem Speicher der Steuerschaltung (20).

**16.** Verfahren nach Anspruch 14, bei dem die Steuerschaltung (20) eine Füllstandsmessung durchführt, indem sie vorgeht wie folgt:

- Öffnen des Zusatz-Abzweigventils (28) zwischen dem Druckfühler (14) und der oberen Öffnung (10) des pneumatischen Rohrs (2), während das Abzweigventil (16) in dem pneumatischen Rohr (2) geschlossen bleibt;
- Bestimmen des Abweichungsfaktors des Druckfühlers (14) in Abhängigkeit von einem von dem Druckfühler (14) erhaltenen Messwerts;
- Schließen des Zusatz-Abzweigventils (28) zwischen dem Druckfühler (14) und der oberen Öffnung (10) des pneumatischen Rohrs (2);
- Einschalten des Gasgenerators (12), um einem Flüssigkeitsdruck in dem pneumatischen Rohr (2) entgegenzuwirken bis zum Erreichen eines Gleichgewichtsdrucks an der unteren Öffnung (8) des pneumatischen Rohrs (2);
- Verarbeiten eines ersten von dem Druckfühler (14) erhaltenen, einer Druckablesung an der unteren Öffnung (8) des pneumatischen Rohrs (2) entsprechenden Messwerts;
- Öffnen des Abzweigventils (16) in dem pneumatischen Rohr (2);
- Verarbeiten eines zweiten von dem Druckfühler (14) erhaltenen, einer Druckablesung an der Verbindungsöffnung (18) des Abzweigventils (16) in dem pneumatischen Rohr (2) entsprechenden Messwerts;
- Generieren der Füllstandsdaten gemäß den Druckmessungen in Abhängigkeit von dem Eichkoeffizienten und dem Abweichungsfaktor;
- Schließen des Abzweigventils (16) in dem pneumatischen Rohr (2);
- Bestimmen des Eichfaktors als Funktion einer Differenz zwischen dem ersten und zweiten Messwert; und
- Generieren der Füllstandsdaten gemäß den Druckmesswerten in Abhängigkeit von dem Eichkoeffizienten und dem Abweichungsfaktor.

EP 1 366 342 B1

CLAVIER — AFFICHAGE

CAPTEUR DE PRESSION

14

52  46

24

28  30

32  22

CIRCUIT DE CONTRÔLE 20

GÉNÉRATEUR DE GAZ

12

10

26

48

50

D

44

54

11

2

34

36

6

4

A

E

B

18

42  16

38

36

F

G

34

C

8  9

FIG. 1

21

## EXEMPLE "A"

## AUCUNE DÉRIVE, AUCUN CHANGEMENT DU COEFFICIENT "K"

| Limnimètre | 520,000 | ⊠ | Sortie à l'air libre (position D) |
| --- | --- | --- | --- |

| | | | | Facteurs d'étalonnage | |
| --- | --- | --- | --- | --- | --- |
| (A) Niveau de l'eau (m) | 520,000 | | | Origine | Simulation |
| | | | (Pe)Pleine échelle(mètres) | 12,000 | 12,000 |
| (B) Électrovalve (m) | 515,000 | | (S) mV/V/Pleine échelle | 3,00000 | 3,00000 |
| | | | (Km) mètres/mV/V | 4,000 | 4,000 |
| (C) Sortie du tube (m) | 511,000 | | (Kv) mV/V/Mètre | 0,25000 | 0,25000 |
| | | | (D)Dérive (offset) en mV/V | 0,10000 | 0,10000 |

## EXEMPLES DE CALCULS DE VALIDATION

### Résultats du capteur avec les coefficients d'étalonnage d'origine

| | Mètres | mV/V lus | Mètres lus |
| --- | --- | --- | --- |
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
| | | Delta | 0,000 |
| | | Dérive | 0,000 |

### Résultats erronés en simulant coefficient d'étalonnage "mV/V/Pleine échelle" et/ou "dérive (offset)"

| | Mètres | mV/V lus | Mètres lus |
| --- | --- | --- | --- |
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
| | | Delta | 0,000 |
| | | Dérive | 0,000 |

### Nouveaux coefficients d'étalonnage résultant du "Delta" et calculés selon:

| | mV/V lus | Mètres lus |
| --- | --- | --- |
| mV/V/Pleine échelle | 3,00000 | 3,00000 |
| Mètres/mV/V | 4,000 | 4,000 |
| mV/V/Mètre | 0,25000 | 0,25000 |

### Correction du niveau d'eau avec nouveau coefficient "mV/V/Pleine échelle" et/ou "dérive (offset)"

| | Avant correction (m) | Erreur K (m) | Erreur dérive | Après correction (m) | |
| --- | --- | --- | --- | --- | --- |
| (A) Niveau de l'eau | 520,000 | 0,000 | 0,000 | 520,000 | |
| (B) Électrovalve | 520,000 | 0,000 | 0,000 | 520,000 | |
| (C) Sortie du tube | 520,000 | 0,000 | 0,000 | 520,000 | |

### Pourcentage d'efficacité et d'erreur sur l'ensemble de la lecture

| | % Efficacité Installation | % Erreur Sens. (Pe) | % Erreur Dérive (Pe) | % Erreur Lecture (Pe) | % Erreur Lecture |
| --- | --- | --- | --- | --- | --- |
| (B) Électrovalve | 41,67 | 0,00 | 0,00 | 0,00 | 0,00 |
| (C) Sortie du tube | 75,00 | 0,00 | 0,00 | 0,00 | 0,00 |

## FIG. 2

# GRAPHIQUE DE L'EXEMPLE "A"

## AUCUNE DÉRIVE, AUCUN CHANGEMENT COEFFICIENT "K"

CAPTEUR DE NIVEAUX HYDRIQUES

mV/V / mètre

●—Simulation    ——Capteur d'origine

## FIG. 3

## EXEMPLE "B"

### CHANGEMENT DE LA DÉRIVE SEULEMENT

| Limnimètre | 520,800 | ⊳⊲ — Sortie à l'air libre (position D) |
|---|---|---|

|  |  |  | Facteurs d'étalonnage | |
|---|---|---|---|---|
|  |  |  | Origine | Simulation |
| (A) Niveau de l'eau (m) | 520,000 | (Pe)Pleine échelle(mètres) | 12,000 | 12,000 |
| (B) Électrovalve (m) | 515,000 | (S) mV/V/Pleine échelle | 3,00000 | 3,00000 |
|  |  | (Km) mètres/mV/V | 4,000 | 4,000 |
| (C) Sortie du tube (m) | 511,000 | (Kv) mV/V/Mètre | 0,25000 | 0,25000 |
|  |  | (D)Dérive (offset) en mV/V | 0,10000 | 0,30000 |

### EXEMPLES DE CALCULS DE VALIDATION

#### Résultats du capteur avec les coefficients d'étalonnage d'origine

|  | Mètres | mV/V lus | Mètres lus |
|---|---|---|---|
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
|  |  | Delta | 0,000 |
|  |  | Dérive | 0,000 |

#### Résultats erronés en simulant coefficient d'étalonnage "mV/V/Pleine échelle" et/ou "dérive (offset)"

|  | Mètres | mV/V lus | Mètres lus |
|---|---|---|---|
| (A) Niveau de l'eau | 520,000 | 0,30000 | 520,800 |
| (B) Électrovalve | 515,000 | 1,55000 | 520,800 |
| (C) Sortie du tube | 511,000 | 2,55000 | 520,800 |
|  |  | Delta | 0,000 |
|  |  | Dérive | 0,800 |

#### Nouveaux coefficients d'étalonnage résultant du "Delta" et calculés selon:

|  | mV/V lus | Mètres lus |
|---|---|---|
| mV/V/Pleine échelle | 3,00000 | 3,00000 |
| Mètres/mV/V | 4,000 | 4,000 |
| mV/V/Mètre | 0,25000 | 0,25000 |

#### Correction du niveau d'eau avec nouveau coefficient "mV/V/Pleine échelle" et/ou "dérive (offset)"

|  | Avant correction (m) | Erreur K (m) | Erreur dérive | Après correction (m) |
|---|---|---|---|---|
| (A) Niveau de l'eau | 520,800 | 0,000 | 0,800 | 520,000 |
| (B) Électrovalve | 520,800 | 0,000 | 0,800 | 520,000 |
| (C) Sortie du tube | 520,800 | 0,000 | 0,800 | 520,000 |

#### Pourcentage d'efficacité et d'erreur sur l'ensemble de la lecture

|  | % Efficacité Installation | % Erreur Sens. (Pe) | % Erreur Dérive (Pe) | % Erreur Lecture (Pe) | % Erreur Lecture |
|---|---|---|---|---|---|
| (B) Électrovalve | 41,67 | 0,00 | 6,67 | 6,67 | 0,15 |
| (C) Sortie du tube | 75,00 | 0,00 | 6,67 | 6,67 | 0,15 |

## FIG. 4

# GRAPHIQUE DE L'EXEMPLE "B"

### CHANGEMENT DE LA DÉRIVE SEULEMENT

**CAPTEUR DE NIVEAUX HYDRIQUES**

Légende:
—●—Simulation    ——Capteur d'origine

Axe vertical gauche: Pleine échelle du capteur (m)
Axe vertical droit: Niveau de l'eau (m)
Axe horizontal: mV/V / mètre

## FIG. 5

# EXEMPLE "C"

## CHANGEMENT DU COEFFICIENT "K" SEULEMENT

| Limnimètre | 520,600 | ⊠ — ⟨~⟩ — Sortie à l'air libre (position D) |

| | | | Facteurs d'étalonnage | |
|---|---|---|---|---|
| | | | Origine | Simulation |
| (A) Niveau de l'eau (m) | 520,000 | (Pe)Pleine échelle(mètres) | 12,000 | 12,000 |
| (B) Électrovalve (m) | 515,000 | (S) mV/V/Pleine échelle | 3,00000 | 3,20000 |
| | | (Km) mètres/mV/V | 4,000 | 3,750 |
| (C) Sortie du tube (m) | 511,000 | (Kv) mV/V/Mètre | 0,25000 | 0,26667 |
| | | (D)Dérive (offset) en mV/V | 0,10000 | 0,10000 |

## EXEMPLES DE CALCULS DE VALIDATION

### Résultats du capteur avec les coefficients d'étalonnage d'origine

| | Mètres | mV/V lus | Mètres lus |
|---|---|---|---|
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
| | | Delta | 0,000 |
| | | Dérive | 0,000 |

### Résultats erronés en simulant coefficient d'étalonnage "mV/V/Pleine échelle" et/ou "dérive (offset)"

| | Mètres | mV/V lus | Mètres lus |
|---|---|---|---|
| (A) Niveau de l'eau | 520,000 | 0,10000 | 520,000 |
| (B) Électrovalve | 515,000 | 1,43333 | 520,333 |
| (C) Sortie du tube | 511,000 | 2,50000 | 520,600 |
| | | Delta | -0,267 |
| | | Dérive | 0,000 |

### Nouveaux coefficients d'étalonnage résultant du "Delta" et calculés selon:

| | mV/V lus | Mètres lus |
|---|---|---|
| mV/V/Pleine échelle | 3,20000 | 3,20000 |
| Mètres/mV/V | 3,750 | 3,750 |
| mV/V/Mètre | 0,26667 | 0,26667 |

### Correction du niveau d'eau avec nouveau coefficient "mV/V/Pleine échelle" et/ou "dérive (offset)"

| | Avant correction (m) | Erreur K (m) | Erreur dérive | Après correction (m) |
|---|---|---|---|---|
| (A) Niveau de l'eau | 520,000 | 0,000 | 0,000 | 520,000 |
| (B) Électrovalve | 520,333 | 0,333 | 0,000 | 520,000 |
| (C) Sortie du tube | 520,600 | 0,600 | 0,000 | 520,000 |

### Pourcentage d'efficacité et d'erreur sur l'ensemble de la lecture

| | % Efficacité Installation | % Erreur Sens. (Pe) | % Erreur Dérive (Pe) | % Erreur Lecture (Pe) | % Erreur Lecture |
|---|---|---|---|---|---|
| (B) Électrovalve | 41,67 | 2,78 | 0,00 | 2,78 | 0,06 |
| (C) Sortie du tube | 75,00 | 5,00 | 0,00 | 5,00 | 0,12 |

## FIG. 6

# GRAPHIQUE DE L'EXEMPLE "C"

## CHANGEMENT DU COEFFICIENT "K" SEULEMENT

CAPTEUR DE NIVEAUX HYDRIQUES

FIG. 7

## EXEMPLE "D"

### CHANGEMENT DE LA DÉRIVE ET DU COEFFICIENT "K"

| Limnimètre | 521,400 | ⬤◻️—⚪ | Sortie à l'air libre (position D) |
|---|---|---|---|

| | | | | Facteurs d'étalonnage | |
|---|---|---|---|---|---|
| (A) Niveau de l'eau (m) | | 520,000 | | Origine | Simulation |
| | | | (Pe)Pleine échelle(mètres) | 12,000 | 12,000 |
| (B) Électrovalve (m) | | 515,000 | (S)  mV/V/Pleine échelle | 3,00000 | 3,20000 |
| | | | (Km) mètres/mV/V | 4,000 | 3,750 |
| (C) Sortie du tube (m) | | 511,000 | (Kv) mV/V/Mètre | 0,25000 | 0,26667 |
| | | | (D)Dérive (offset) en mV/V | 0,10000 | 0,30000 |

### EXEMPLES DE  CALCULS DE VALIDATION

#### Résultats du capteur avec les coefficients d'étalonnage d'origine

| | Mètres | mV/V lus | Mètres lus |
|---|---|---|---|
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
| | | Delta | 0,000 |
| | | Dérive | 0,000 |

#### Résultats erronés en simulant coefficient d'étalonnage "mV/V/Pleine échelle" et/ou "dérive (offset)"

| | Mètres | mV/V lus | Mètres lus |
|---|---|---|---|
| (A) Niveau de l'eau | 520,000 | 0,30000 | 520,800 |
| (B) Électrovalve | 515,000 | 1,63333 | 521,133 |
| (C) Sortie du tube | 511,000 | 2,70000 | 521,400 |
| | | Delta | -0,267 |
| | | Dérive | 0,800 |

#### Nouveaux coefficients d'étalonnage résultant du "Delta" et calculés selon:

| | mV/V lus | Mètres lus |
|---|---|---|
| mV/V/Pleine échelle | 3,20000 | 3,20000 |
| Mètres/mV/V | 3,750 | 3,750 |
| mV/V/Mètre | 0,26667 | 0,26667 |

#### Correction du niveau d'eau avec nouveau coefficient "mV/V/Pleine échelle" et/ou "dérive (offset)"

| | Avant correction (m) | Erreur K (m) | Erreur dérive | Après correction (m) |
|---|---|---|---|---|
| (A) Niveau de l'eau | 520,800 | 0,000 | 0,800 | 520,000 |
| (B) Électrovalve | 521,133 | 0,333 | 0,800 | 520,000 |
| (C) Sortie du tube | 521,400 | 0,600 | 0,800 | 520,000 |

#### Pourcentage d'efficacité et d'erreur sur l'ensemble de la lecture

| | % Efficacité Installation | % Erreur Sens. (Pe) | % Erreur Dérive (Pe) | % Erreur Lecture (Pe) | % Erreur Lecture |
|---|---|---|---|---|---|
| (B) Électrovalve | 41,67 | 2,78 | 6,67 | 9,44 | 0,22 |
| (C) Sortie du tube | 75,00 | 5,00 | 6,67 | 11,67 | 0,27 |

## FIG. 8

FIG. 9

## EXEMPLE "E"

### DÉRIVE ET COEFFICIENT "K" MODIFIÉS (CROISEMENT DES COURBES)

| Limnimètre | 522,000 | ⊶⋈⊷ ⊸◯↙ — Sortie à l'air libre (position D) |
|---|---|---|

|  |  |  | Facteurs d'étalonnage | |
|---|---|---|---|---|
|  |  |  | Origine | Simulation |
| (A) Niveau de l'eau (m) | 520,000 | (Pe)Pleine échelle(mètres) | 12,000 | 12,000 |
|  |  | (S) mV/V/Pleine échelle | 3,00000 | 3,40000 |
| (B) Électrovalve (m) | 515,000 | (Km) mètres/mV/V | 4,000 | 3,529 |
|  |  | (Kv) mV/V/Mètre | 0,25000 | 0,28333 |
| (C) Sortie du tube (m) | 511,000 | (D) Dérive (offset) en mV/V | 0,10000 | 0,30000 |

### EXEMPLES DE CALCULS DE VALIDATION

#### Résultats du capteur avec les coefficients d'étalonnage d'origine

|  | Mètres | mV/V lus | Mètres lus |
|---|---|---|---|
| (A) Niveau de l'eau | 520,000 | 0,10000 | 520,000 |
| (B) Électrovalve | 515,000 | 1,35000 | 520,000 |
| (C) Sortie du tube | 511,000 | 2,35000 | 520,000 |
|  |  | Delta | 0,000 |
|  |  | Dérive | 0,000 |

#### Résultats erronés en simulant coefficient d'étalonnage "mV/V/Pleine échelle" et/ou "dérive (offset)"

|  | Mètres | mV/V lus | Mètres lus |
|---|---|---|---|
| (A) Niveau de l'eau | 520,000 | 0,30000 | 520,800 |
| (B) Électrovalve | 515,000 | 1,71667 | 521,467 |
| (C) Sortie du tube | 511,000 | 2,85000 | 522,000 |
|  |  | Delta | -0,533 |
|  |  | Dérive | 0,800 |

#### Nouveaux coefficients d'étalonnage résultant du "Delta" et calculés selon:

|  | mV/V lus | Mètres lus |
|---|---|---|
| mV/V/Pleine échelle | 3,40000 | 3,40000 |
| Mètres/mV/V | 3,529 | 3,529 |
| mV/V/Mètre | 0,28333 | 0,28333 |

#### Correction du niveau d'eau avec nouveau coefficient "mV/V/Pleine échelle" et/ou "dérive (offset)"

|  | Avant correction (m) | Erreur K (m) | Erreur dérive | Après correction (m) |
|---|---|---|---|---|
| (A) Niveau de l'eau | 520,800 | 0,000 | 0,800 | 520,000 |
| (B) Électrovalve | 521,467 | 0,667 | 0,800 | 520,000 |
| (C) Sortie du tube | 522,000 | 1,200 | 0,800 | 520,000 |

#### Pourcentage d'efficacité et d'erreur sur l'ensemble de la lecture

|  | % Efficacité Installation | % Erreur Sens. (Pe) | % Erreur Dérive (Pe) | % Erreur Lecture (Pe) | % Erreur Lecture |
|---|---|---|---|---|---|
| (B) Électrovalve | 41,67 | 5,56 | 6,67 | 12,22 | 0,28 |
| (C) Sortie du tube | 75,00 | 10,00 | 6,67 | 16,67 | 0,38 |

## FIG. 10

# GRAPHIQUE DE L'EXEMPLE "E"

### DÉRIVE ET COEFFICIENT "K" MODIFIÉS (CROISEMENT DES COURBES)

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3729997 A, Luke
- US 3751185 A, Gottliebson
- US 3987675 A, Harrison
- US 4002068 A, Borst
- US 4006636 A, Holmen
- US 4422327 A, Anderson
- US 4567761 A, Fajeau
- US 4669309 A, Cornelius
- US 4711127 A, Häfner
- US 5005408 A, Glassey
- US 5052222 A, Stoepfel
- US 5090242 A, Hilton
- US 5146783 A, Jansche
- US 5167144 A, Schneider
- US 5207251 A, Cooks
- US 5309764 A, Waldrop
- US 5406828 A, Hunter
- US 5517869 A, Vories
- US 5636547 A, Raj
- US 5650561 A, Tubergen
- US 5953954 A, Drain
- US 4630478 A
- US 2559436 A